Europäisches Patentamt

European Patent Office

Office européen des brevets

(19)

(11) EP 1 508 790 A1

(12) EUROPEAN PATENT APPLICATION
published in accordance with Art. 158(3) EPC

(43) Date of publication:
23.02.2005 Bulletin 2005/08

(51) Int Cl.⁷: G01K 7/38, G01K 13/08,
B60C 19/00, B60C 23/20

(21) Application number: 03721051.5

(22) Date of filing: 07.05.2003

(86) International application number:
PCT/JP2003/005698

(87) International publication number:
WO 2003/100370 (04.12.2003 Gazette 2003/49)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 24.05.2002 JP 2002150678
24.05.2002 JP 2002150708
09.10.2002 JP 2002296075
09.10.2002 JP 2002296182

(71) Applicant: Bridgestone Corporation
Tokyo 104-8340 (JP)

(72) Inventors:
• KIKUCHI, Masami,
BRIDGESTONE CORP. Tech. Cntr.
Kodaira-shi, Tokyo 187-8531 (JP)

• SHIZUKU, Takahisa,
BRIDGESTONE CORP Tech. Cntr.
Kodaira-shi, Tokyo 187-8531 (JP)
• AOIKE, Yukio,
BRIDGESTONE CORP. Tech. Cntr.
Kodaira-shi, Tokyo 187-8531 (JP)
• AIZAWA, Satoshi,
BRIDGESTONE CORP. Tech. Cntr.
Kodaira-shi, Tokyo 187-8531 (JP)

(74) Representative: Whalley, Kevin
MARKS & CLERK,
57-60 Lincoln's Inn Fields
London WC2A 3LS (GB)

(54) TIRE TEMPERATURE SENSOR, TIRE HEAT DETERIORATION DETECTION SENSOR, AND TIRE

(57) A change of magnetic characteristics of a magnetic circuit constituting body or a composite magnet arranged in a necessary portion of a tire is detected by a magnetic sensor detecting a magnetic field leaked from the magnetic circuit constituting body or a magnetic filed from the composite magnet, while a temperature in the necessary portion of the tire is directly measured or a degree of heat deterioration is directly measured by using a tire temperature sensor or a tire heat deterioration detection sensor constructed so as ot change the magnetic characteristics of the magnetic circuit constituting body or the composite magnet dependent on the temperature or the degree of heat deterioration in the necessary portion of the tire, whereby it is possible to attain an early identification of the abnormality on the possibility bringing about the troubles of the tire. Also, there is provided a tire temperature sensor or a tire heat deterioration detection sensor causing no fear of the early battery drain.

FIG. 1

EP 1 508 790 A1

**Description**

<u>TECHNICAL FIELD</u>

This invention relates to a tire temperature sensor used for monitoring a temperature in a specific portion of a tire to inform an abnormality of a tire temperature to a driver, or a tire heat deterioration detection sensor used for monitoring a progress degree of heat deterioration to inform an abnormal progress of tire heat deterioration to a driver.

<u>BACKGROUND ART</u>

A cause of a serious trouble in tires is predominant in the heat deterioration at a portion causing such a trouble, so that a prelude to the occurrence of the trouble can be directly caught by measuring the degree of the heat deterioration. For this end, it is expected to realize a system of raising an alarm when the degree of the tire heat deterioration exceeds a given value, but it is difficult to design a sensor directly detecting the degree of the heat deterioration and such a system is not yet realized.

On the other hand, it is attempted to catch an abnormal rise of tire temperature causing the heat deterioration to use in an alarm to a driver as a prediction means for the tire trouble. In this connection, there has hitherto been known a system wherein a temperature sensor detecting a tire temperature is built in a tire internal pressure alarming device mounted onto a rim. This temperature sensor detects a temperature from a change of electric characteristics by utilizing a feature that electric characteristics of a semiconductor changes dependent on a temperature. The temperature data detected by the temperature sensor are transmitted to a receiver arranged at a side of a vehicle body, at where a case that the temperature data exceed a given temperature set therein is judged as an abnormality and the judged result is informed to a driver.

However, the temperature sensor built in the tire internal pressure alarming device merely measures an air temperature in an inner pressure portion of the tire. In order to predict a possibility that an abnormal heat generation is caused in a certain portion of the tire to generate a separation failure or a burst, it is necessary to directly measure a temperature of the heat generated portion, but if it is intended to use the conventional temperature sensor in such an application, it is not effective in practical use.

Further, the conventional temperature sensor requires a power source for detecting the temperature. Also, the tire internal pressure alarming device building the temperature sensor therein is attached to a rotating rim, so that it is difficult to feed a power from a side of a vehicle body, and hence the tire internal pressure alarming device is constructed so as to feed a power by building a battery in the interior thereof. However, an early battery drain comes into problem.

The invention is made in the light of the above problems and is to provide a temperature sensor or a heat deterioration detection sensor in which a temperature in a required portion of a tire is directly measured or a degree of heat deterioration is directly detected to enable an early identification of the abnormality on the possibility bringing about the troubles of the tire and there is no fear of the early battery drain.

<u>DISCLOSURE OF THE INVENTION</u>

The invention is made for achieving the above object and the construction and function thereof are mentioned as follows.

(1) The invention is a tire temperature sensor for detecting a temperature in a necessary portion of a tire, which is a tire temperature sensor comprising a magnetic circuit constituting body arranged in the above portion of the tire and forming a magnetic closed circuit, and a magnetic sensor detecting a magnetic field leaked from the magnetic circuit constituting body, in which said magnetic circuit constituting body has a characteristic of increasing a leakage magnetic field as a temperature rises in the vicinity of a predefined temperature.

When the temperature in the tire portion provided with the magnetic circuit constituting body having such a characteristic abnormally rises, the temperature of the magnetic circuit constituting body itself rises over a predefined temperature and the leakage magnetic field increases at this time, and hence a magnetic flux density of the magnetic sensor detecting the magnetic field leaked from the magnetic circuit constituting body increases.

Thus, the tire temperature and the magnetic flux density detected by the magnetic sensor can be primarily related to each other. If a relational expression representing such a relation is previously provided, the temperature in the tire portion provided with the magnetic circuit constituting body can be measured by a back calculation method or the temperature abnormality in this portion can be judged from the measured magnetic flux density using the above relational expression.

According to the invention, the temperature in the tire portion provided with the magnetic circuit constituting body can be directly measured as mentioned above, and also the magnetic circuit constituting body arranged in the tire does not require a battery, so that the problem of the early battery drain can be solved if the magnetic sensor requiring the battery is arranged on a portion other than the tire.

(2) In the tire temperature sensor of the invention described in the item (1), the magnetic circuit constituting body comprises at least one permanent magnet and at least one temperature-sensitive magnetic body magnetically connected to a magnetic pole of the permanent magnet, and the temperature-sensitive magnetic body has a characteristic of dropping a permeability as the temperature rises in the vicinity of the predefined temperature.

According to the invention, the magnetic circuit constituting body is constructed with the temperature-sensitive magnetic body and the permanent magnet, so that when the temperature in the tire portion provided with the magnetic circuit constituting body rises near to the predefined temperature, the permeability of the temperature-sensitive magnetic body lowers to decrease the magnetic flux density in the magnetic circuit constituting body and the magnetic field leaked from the magnetic circuit constituting body increases accompanied therewith. Thus, the above characteristic can be given to the magnetic circuit constituting body, and also the leakage magnetic field can be changed in a higher sensitivity with respect to the change of the temperature as compared with a case comprised of only the permanent magnet.

(3) In the tire temperature sensor of the invention described in the item (2), between a magnetic pole of the permanent magnet and an end of the temperature-sensitive magnetic body is arranged a magnetic connecting yoke magnetically connecting them, and the magnetic connecting yoke is made of a magnetic body having a high permeability.

According to the invention, the magnetic circuit constituting body is constructed by connecting the permanent magnet and the temperature-sensitive magnetic body through the magnetic connecting yoke made of the magnetic body having a high permeability, so that a magnetic resistance between the permanent magnet and the temperature-sensitive magnetic body can be controlled to enhance a gain of the change of permeability in the temperature-sensitive magnetic body to the change of magnetic flux density in the magnetic circuit and hence there can be provided a tire temperature sensor having a high sensitivity.

(4) In the tire temperature sensor of the invention described in the item (2) or (3), the magnetic circuit constituting body is attached to an inner face of the tire, and the magnetic circuit constituting body is constructed with a laminate including two layers of a permanent magnet sheet made of the permanent magnet and a temperature-sensitive magnetic body sheet made of the temperature-sensitive magnetic body, and the temperature-sensitive magnetic body sheet is arranged onto a face of the tire to be attached.

According to the invention, the magnetic circuit constituting body is constructed with a laminate structure stratified inward from the inner face of the tire in the radial direction of the tire, so that a protruding amount from the inner face of the tire 9 can be minimized to prevent the damaging of the performances inherent to the tire due to the protrusion, and also the surface temperature of the tire can be directly grasped because the temperature-sensitive magnetic body is arranged onto the surface of the tire to be attached.

(5) In the tire temperature sensor of the invention described in the item (4), a radiation yoke concentrically radiating a leakage magnetic field is arranged on a side of the permanent magnet sheet opposite to the temperature-sensitive magnetic body sheet.

According to the invention, the radiation yoke concentrating the leakage magnetic field is arranged at the inside of the tire in the radial direction, so that the leakage magnetic field can be radiated efficiently.

(6) The invention is a tire temperature sensor detecting a temperature in a necessary portion of a tire, which is a tire temperature sensor comprising a composite magnet arranged in this portion of the tire and having magnetic poles of reverse polarity at both ends thereof and a magnetic sensor detecting a magnetic field formed by the composite magnet, in which said composite magnet has a characteristic of dropping a magnetic force as a temperature rises in the vicinity of a predefined temperature.

When the temperature of the tire portion provided with the composite magnet having the above characteristic abnormally rises, the temperature of the composite magnet itself rises over the predefined temperature, and the magnetic force of the composite magnet decreases at this time, and hence the magnetic flux density of the magnetic sensor detecting the magnetic field from the composite magnet lowers. Thus, the tire temperature and the magnetic flux density detected by the magnetic sensor can be primarily related to each other. If a relational expression representing such a relation is previously provided, the temperature in the tire portion provided with the composite magnet can be measured by a back calculation method or the temperature abnormality can be judged from the measured magnetic flux density using the above relational expression.

In the tire temperature sensor of the invention, the temperature in the tire portion provided with the composite magnet is directly measured, so that the temperature of the necessary portion of the tire can be known accurately. Also, the composite magnet arranged in the tire does not require a battery, so that the problem of the early battery drain can be solved if the magnetic sensor requiring a battery is arranged on a portion other than the tire as previously mentioned.

Further, it is preferable in view of a fail safe that an output in the breakdown of the sensor detecting the abnormality is generally made the same as an output in the detection of the abnormality by the sensor. Because, if the same output as in the normal state is put in the breakdown of the sensor, the occurrence of abnormality in the breakdown of the sensor can not be detected. According to this tire temperature sensor, the magnetic flux density detected by the magnetic sensor is small in the case that the temperature abnormally rises, so that the output from the magnetic sensor is zero likewise the case that the magnetic sensor is broken, which is preferable in view of a fail safe.

(7) In the tire temperature sensor of the invention described in the item (6), the composite magnet comprises at least one permanent magnet and at least one

temperature-sensitive magnetic body magnetically connected to a magnetic pole of the permanent magnet, and the temperature-sensitive magnetic body has a characteristic of dropping a permeability as the temperature rises in the vicinity of the predefined temperature.

According to the invention, the composite magnet is constructed with the temperature-sensitive magnetic body and the permanent magnet, so that when the temperature in the tire portion provided with the composite magnet rises near to the predefined temperature, the permeability of the temperature-sensitive magnetic body lowers to decrease the magnetic force of the composite magnet as a whole, whereby the above characteristic can be given to the composite magnet. Also, the magnetic force can be changed in a higher sensitivity with respect to the change of the temperature as compared with a case comprised of only the permanent magnet.

(8) In the tire temperature sensor of the invention described in the item (6) or (7), a high permeability magnetic body ribbon extending up to a neighborhood of a bead portion of the tire and attached to an inner face of the tire is magnetically connected to both magnetic poles of the composite magnet, respectively.

According to the invention, the high permeability magnetic body ribbon magnetically connected to each magnetic pole of the composite magnet is extended up to the neighborhood of the bead portion, so that the magnetic force of the composite magnet is developed as a magnetic field formed between ends of the each ribbon in the vicinity of the bead portion, which can be detected by the magnetic sensor usually arranged on a rim or in the vicinity thereof in a high sensitivity, and hence a temperature sensor having a higher sensitivity can be constructed.

(9) In the tire temperature sensor of the invention described in any one of the items (1)-(8), a magnetic sensor is arranged on a non-rotating portion at a side of a vehicle body.

When a member requiring a power source is arranged on a rotating portion such as a tire or the like, it is difficult to feed a power to this member through wiring, so that the feeding of power falls back on a battery, so that the problem of the early battery drain can not be avoided as previously mentioned. However, according to the invention, the magnetic circuit constituting body or the composite magnet does not consume the power and the magnetic sensor requiring the power is arranged on the non-rotating portion at the side of the vehicle body, so that the power for the magnetic sensor can be fed from the side of the vehicle body through wiring, and hence the problem on the feeding of power can be solved.

(10) In the tire temperature sensor of the invention described in the item (9), the magnetic sensor is arranged on an upper part of a non-rotating portion of an axle.

According to the invention, the magnetic sensor is arranged on the upper part of the non-rotating portion of the axle, so that when the magnetic circuit constituting body or the composite magnet arranged in the given portion of the tire is rotated at a position of a rotating angle corresponding to the magnetic sensor arranged on the upper part of the non-rotating portion of the axle, the magnetic sensor detects a maximum magnetic flux density. At this rotating angle position, the tire portion attached with the magnetic circuit constituting body or the composite magnet is not subjected to an influence of a ground contact form of the tire deformed dependent on the axle load or vibrations, so that it is possible to stably measure the tire temperature. Moreover, the term "upper part" of the non-rotating portion of the axle means a portion of the axle opposite to a road surface in a vehicle on the road surface.

(11) In the tire temperature sensor of the invention described in any one of the items (1)-(8), the magnetic sensor is arranged on a rotating portion of an axle.

According to the invention, since the magnetic sensor is arranged on the rotating portion of the axle, the magnetic circuit constituting body or the composite magnet and the magnetic sensor are fixed to a rotating wheel so as to make a relative distance therebetween in the circumferential direction nearest to each other, whereby the magnetic sensor can detect a magnetic field formed by the magnetic circuit constituting body or the composite magnet even at any rotating positions of the wheel, and hence it is possible to continuously detect the temperature.

(12) In the tire temperature sensor of the invention described in any one of the items (1)-(11), a rare earth magnetic material is used as a magnetic material forming the permanent magnet.

According to this tire temperature sensor, the rare earth magnetic material is used as the permanent magnet, so that the magnetic circuit constituting body or the composite magnet can be rendered into a higher magnetic flux density at a state that the temperature-sensitive magnetic body is a high permeability, and hence there can be provided a tire temperature sensor having a high sensitivity.

(13) In the tire temperature sensor of the invention described in any one of the items (1)-(12), as a material forming the temperature-sensitive magnetic body is used a Ni-based alloy inclusive of NiCu, Ni-Al, NiCr, NiV, NiSi, NiTi, NiMo and NiZn, a Mn-Cu based alloy, a $Ni-Zn-Fe_2O_4$ based alloy, a $Mn-Zn-Fe_2O_3$ based alloy, a Fe-Ni based alloy, a Ni-Cu based alloy or a Fe-Ni-Cr-Si based alloy.

According to the invention, the temperature-sensitive magnetic body is made of the above material, so that a Curie point of the temperature-sensitive magnetic body can be set to a range of 80°C-250°C as a general upper limit temperature of each portion of the tire by properly adjusting a compounding ratio of these materials, and hence it can be advantageously used as a sensor for detecting that a temperature exceeds over an acceptable upper limit temperature in each portion of the tire.

(14) In the tire temperature sensor of the invention described in any one of the items (1)-(13), each of the permanent magnet and the temperature-sensitive magnetic body is made of a bond magnetic body formed by mixing and dispersing magnetic powder into rubber.

According to the invention, each of the permanent magnet constituting the magnetic circuit constituting body or the composite magnet and the temperature-sensitive magnetic body is formed by mixing and dispersing powder of a magnet or a high permeability magnetic body as a magnetic powder into rubber, so that the magnetic circuit constituting body or the composite magnet can deform following to a large deformation of the tire, and hence it can be prevented that the magnetic circuit constituting body or the composite magnet peels off from the tire or obstructs the normal deformation of the tire, or that the magnetic circuit constituting body or the composite magnet itself is broken.

(15) The invention is a tire heat deterioration detection sensor for detecting a degree of heat deterioration in an necessary portion of a tire, which is a tire heat deterioration detection sensor comprising a magnetic circuit constituting body arranged in this necessary portion of the tire and forming a magnetic closed circuit and a magnetic sensor detecting a magnetic field leaked from the magnetic circuit constituting body, in which the magnetic circuit constituting body has a characteristic of increasing a leakage magnetic field accompanied with the progress of heat deterioration.

As the heat deterioration of the tire portion progresses, the heat deterioration of the magnetic circuit constituting body itself arranged in this tire portion progresses. Since the magnetic circuit constituting body has the characteristic as mentioned above, the leakage magnetic field therefrom increases and the magnetic flux density detected by the magnetic sensor increases. Thus, the degree of heat deterioration of the tire can be primarily related to the magnetic flux density of the magnetic sensor. If a relational expression representing such a relation is previously provided, the degree of heat deterioration in the tire portion provided with the magnetic circuit constituting body can be measured by a back calculation method or the abnormal progress of the heat deterioration in this portion can be judged from the detected magnetic flux density using the above relational expression.

According to the invention, the heat deterioration in the tire portion provided with the magnetic circuit constituting body can be directly measured as mentioned above, and also the magnetic circuit constituting body arranged in the tire does not require a battery, so that the problem of the early battery drain can be solved if the magnetic sensor requiring the battery is arranged on a portion other than the tire.

(16) In the tire heat deterioration detection sensor of the invention described in the item (15), the magnetic circuit constituting body comprises at least one permanent magnet and at least one heat deterioration magnetic body magnetically connected to a magnetic pole of the permanent magnet, and the heat deterioration magnetic body has a characteristic of dropping a permeability accompanied with the progress of the heat deterioration.

According to the invention, the magnetic circuit constituting body is constructed with the heat deterioration magnetic body and the permanent magnet, so that when the heat deterioration in the tire portion provided with the magnetic circuit constituting body progresses, the permeability of the heat deterioration magnetic body lowers to decrease the magnetic flux density in the magnetic circuit constituting body and the magnetic field leaked from the magnetic circuit constituting body increases accompanied therewith. Thus, the above characteristic can be simply given to the magnetic circuit constituting body.

(17) In the tire heat deterioration detection sensor of the invention described in the item (16), between a magnetic pole of the permanent magnet and an end of the heat deterioration magnetic body is arranged a magnetic connecting yoke magnetically connecting them, and the magnetic connecting yoke is made of a magnetic body having a high permeability.

According to the invention, the magnetic circuit constituting body is constructed by connecting the permanent magnet and the heat deterioration magnetic body through the magnetic connecting yoke made of the magnetic body having a high permeability, so that a magnetic resistance between the permanent magnet and the heat deterioration magnetic body can be controlled to enhance a gain of the change of permeability in the heat deterioration magnetic body to the change of magnetic flux density in the magnetic circuit and hence there can be provided a tire heat deterioration sensor having a high sensitivity.

(18) In the tire heat deterioration detection sensor of the invention described in the item (16) or (17), the magnetic circuit constituting body is attached to an inner face of the tire, and the magnetic circuit constituting body is constructed with a laminate including two layers of a permanent magnet sheet made of the permanent magnet and a heat deterioration magnetic body sheet made of the heat deterioration magnetic body, and the heat deterioration magnetic body sheet is arranged onto a face of the tire to be attached.

According to the invention, the magnetic circuit constituting body is constructed with a laminate structure stratified inward from the inner face of the tire in the radial direction of the tire, so that a protruding amount from the inner face of the tire 9 can be minimized to prevent the damaging of the performances inherent to the tire due to the protrusion, and also the heat deterioration of the tire can be sensitively grasped because the heat deterioration magnetic body is arranged onto the surface of the tire to be attached.

(19) In the tire heat deterioration detection sensor of the invention described in the item (18), a radiation yoke concentrically radiating a leakage magnetic field is arranged on a side of the permanent magnet sheet opposite to the heat deterioration magnetic body sheet.

According to the invention, the radiation yoke concentrating the leakage magnetic field is arranged at the inside of the tire in the radial direction, so that the leakage magnetic field can be radiated efficiently in a required direction.

(20) The invention is a tire heat deterioration detection sensor detecting a degree of heat deterioration in a necessary portion of a tire, which is a tire heat deterioration detection sensor comprising a composite magnet arranged in this portion of the tire and having magnetic poles of reverse polarity at both ends thereof and a magnetic sensor detecting a magnetic field formed by the composite magnet, in which said composite magnet has a characteristic of dropping a magnetic force accompanied with the progress of heat deterioration.

When the heat deterioration of the tire portion provided with the composite magnet having the above characteristic progresses, the heat deterioration of the composite magnet itself progresses, and the magnetic force of the composite magnet decreases at this time, and hence the magnetic flux density of the magnetic sensor detecting the magnetic field from the composite magnet lowers. Thus, the degree of tire heat deterioration and the magnetic flux density detected by the magnetic sensor can be primarily related to each other. If a relational expression representing such a relation is previously provided, the heat deterioration in the tire portion provided with the composite magnet can be measured by a back calculation method or the abnormal progress of the heat deterioration can be judged from the measured magnetic flux density using the above relational expression.

In the invention, the degree of heat deterioration in the tire portion provided with the composite magnet is directly measured, so that the degree of heat deterioration in the necessary portion of the tire can be known accurately. Also, the composite magnet arranged in the tire does not require a battery, so that the problem of the early battery drain can be solved if the magnetic sensor requiring a battery is arranged on a portion other than the tire as previously mentioned.

Further, it is preferable in view of a fail safe that an output in the breakdown of the sensor detecting the abnormality is generally made the same as an output in the detection of the abnormality by the sensor. Because, if the same output as in the normal state is put in the breakdown of the sensor, the occurrence of abnormality in the breakdown of the sensor can not be detected. According to this tire temperature sensor, the magnetic flux density detected by the magnetic sensor is small in the case that the heat deterioration abnormally progresses, so that the output from the magnetic sensor is zero likewise the case that the magnetic sensor is broken, which is preferable in view of a fail safe.

(21) In the tire heat deterioration detection sensor of the invention described in the item (20), the composite magnet comprises at least one permanent magnet and at least one heat deterioration magnetic body magnetically connected to a magnetic pole of the permanent magnet, and the heat deterioration magnetic body has a characteristic of dropping a permeability accompanied with the progress of heat deterioration.

According to the invention, the composite magnet is constructed with the heat deterioration magnetic body and the permanent magnet, so that when the heat deterioration in the tire portion provided with the composite magnet progresses, the permeability of the hest deterioration magnetic body lowers to decrease the magnetic force of the composite magnet, whereby the above characteristic can be given to the composite magnet.

(22) In the tire heat deterioration detection sensor of the invention described in the item (20) or (21), a high permeability magnetic body ribbon extending up to a neighborhood of a bead portion of the tire and attached to an inner face of the tire is magnetically connected to both magnetic poles of the composite magnet, respectively.

According to the invention, the high permeability magnetic body ribbon magnetically connected to each magnetic pole of the composite magnet is extended up to the neighborhood of the bead portion, so that the magnetic force of the composite magnet is developed as a magnetic field formed between ends of the each ribbon in the vicinity of the bead portion, which can be detected by the magnetic sensor usually arranged on a rim or in the vicinity thereof in a high sensitivity, and hence a heat deterioration detection sensor having a higher sensitivity can be constructed.

(23) In the tire heat deterioration detection sensor of the invention described in any one of the items (15)-(22), a magnetic sensor is arranged on a non-rotating portion at a side of a vehicle body.

According to the invention, the magnetic circuit constituting body or the composite magnet does not consume the power and the magnetic sensor requiring the power is arranged on the non-rotating portion at the side of the vehicle body, so that the power for the magnetic sensor can be fed from the side of the vehicle body through wiring, and hence the problem on the feeding of power can be solved.

(24) In the tire heat deterioration detection sensor of the invention described in the item (23), the magnetic sensor is arranged on an upper part of a non-rotating portion of an axle.

According to the invention, the magnetic sensor is arranged on the upper part of the non-rotating portion of the axle, so that when the magnetic circuit constituting body or the composite magnet arranged in the given portion of the tire is rotated at a position of a rotating angle corresponding to the magnetic sensor arranged on the upper part of the non-rotating portion of the axle, the magnetic sensor detects a maximum magnetic flux density. At this rotating angle position, the tire portion attached with the magnetic circuit constituting body or the composite magnet is not subjected to an influence of a ground contact form of the tire deformed dependent on the axle load or vibrations, so that it is possible to stably measure the tire heat deterioration.

(25) In the tire heat deterioration detection sensor of the invention described in any one of the items (15)-(24), the magnetic sensor is arranged on a rotating portion of an axle.

According to the invention, since the magnetic sensor is arranged on the rotating portion of the axle, the magnetic circuit constituting body or the composite magnet and the magnetic sensor are fixed to a rotating wheel so as to make a relative distance therebetween in the circumferential direction nearest to each other, whereby the magnetic sensor can detect a magnetic field formed by the magnetic circuit constituting body or the composite magnet even at any rotating positions of the wheel, and hence it is possible to continuously detect the degree of heat deterioration.

(26) In the tire heat deterioration detection sensor of the invention described in any one of the items (15)-(25), a rare earth magnetic material is used as a magnetic material forming the permanent magnet.

According to this tire temperature sensor, the rare earth magnetic material is used as the permanent magnet, so that the magnetic circuit constituting body or the composite magnet can be rendered into a higher magnetic flux density at a state that the heat deterioration magnetic body is a high permeability, and hence there can be provided a tire heat deterioration detection sensor having a high sensitivity.

(27) In the tire heat deterioration detection sensor of the invention described in any one of the items (15)-(26), the heat deterioration magnetic body is comprised of high permeability wires arranged along a direction of magnetic force lines and a wire-corroding substance arranged in contact with the surround of the wires, and the wire-corroding substance has a corrosion property to the wire and a characteristic of promoting a corroding rate accompanied with the rise of the temperature.

In the wires constituting the heat deterioration magnetic body in the tire heat deterioration detection sensor, the corrosion progresses in proportion to a time of contacting with the wire-corroding substance therearound, in which the progressing rate becomes faster as the temperature becomes high. As the corrosion of the wires progresses, the diameter of the wire becomes fine in accordance with the widening of the corroded portion or cut portions are increasing, and hence the permeability of the whole of the heat deterioration magnetic body including the wires arranged along a direction of a magnetic circuit lowers. According to this tire heat deterioration detection sensor, the heat deterioration magnetic body having a heat deterioration property relating to the degree of heat deterioration in the tire portion provided with the magnetic circuit constituting body one-on-one can be constructed as mentioned above, and can be easily formed.

(28) In the tire heat deterioration detection sensor of the invention described in any one of the items (15)-(27), the heat deterioration magnetic body is comprised of a binder and a high permeability magnetic powder forming a part of a magnetic circuit by mixing and dispersing into the binder and contacting with each other, and the binder conducts self-decomposition reaction or self-polymerization reaction together with the increase of volume and has a characteristic of accelerating a reaction rate accompanied with the rise of the temperature.

The magnetic powder compounded in the heat deterioration magnetic body in the tire heat deterioration detection sensor contacts with each other at an initial stage to give a high permeability to the heat deterioration magnetic body. On the other hand, the binder existing around the magnetic powder conducts the decomposition reaction or the polymerization reaction within a given temperature range to increase the volume and has the property that the reaction rate increases as the temperature rises, so that the binder increases the volume with the progress of the reaction and enters into spaces among the magnetic powder to cut the contact of the magnetic powder, and hence the permeability of the heat deterioration magnetic body as a whole lowers.

According to this tire heat deterioration detection sensor, the heat deterioration magnetic body having a heat deterioration property relating to the degree of heat deterioration in the tire portion provided with the magnetic circuit constituting body one-on-one can be constructed as mentioned above, and also the heat deterioration magnetic body can be easily formed.

(29) In the tire heat deterioration detection sensor of the invention described in the item (28), the magnetic powder is made of a temperature-sensitive magnetic material lowering a permeability with the rise of a temperature within a given temperature range.

According to this tire heat deterioration detection sensor, the magnetic powder is made of the temperature-sensitive magnetic material lowering a permeability with the rise of a temperature within a given temperature range, so that the permeability of the heat deterioration magnetic body is lowered by not only the progress of the heat deterioration of the tire portion provided with the magnetic circuit constituting body but also the abnormal temperature rise, and hence the leakage magnetic field is increased. Therefore, when the abnormal value of the leakage magnetic field is detected, it can be judged to generate either an abnormality of exceeding the heat deterioration over a given limit or an abnormality of temperature rise, and both abnormality-detecting functions can be provided.

(30) In the tire heat deterioration detection sensor of the invention described in any one of the items (15)-(29), the permanent magnet is made of a bond magnetic body formed by mixing and dispersing a magnetic powder into rubber, and a flexibility is given to the heat deterioration magnetic body.

According to the invention, each of the permanent magnet constituting the magnetic circuit constituting body or the composite magnet and the temperature-sensitive magnetic body is formed by mixing and dispersing powder of a magnet as a magnetic powder into rubber, so that the magnetic circuit constituting body or the composite magnet can deform following to a large deformation of the tire, and hence it can be prevented that the magnetic circuit constituting body or the composite magnet peels off from the tire or obstructs the normal deformation of the tire, or that the magnetic circuit constituting body or the composite magnet itself is broken.

(31) The invention is a tire provided with a magnetic circuit constituting body or a composite magnet described in any one of the items (1)-(30).

According to the tire of the invention, the magnetic circuit constituting body or the composite magnet is arranged, so that it is possible to construct a tire temperature sensor or a tire heat deterioration detection sensor according to the above explanation.

BRIEF DESCRIPTION OF THE DRAWINGS

FIG. 1 is a section view illustrating a state of mounting a tire temperature sensor according to a first embodiment of the invention onto a vehicle.
FIG. 2 is a perspective view of a tire showing a composite magnet.
FIG. 3 is a plane view and a side view of a composite magnet.
FIG. 4 is a perspective view illustrating a construction of a high permeability magnetic body ribbon.
FIG. 5 is a developed view of composite magnets viewed from an inner face of a tire by developing an innerliner into a plane.
FIG. 6 is a view of an arrangement illustrating magnetic force lines formed between ends of a high permeability magnetic body ribbon and magnetic sensors detecting them.
FIG. 7 is a graph showing a time change of a magnetic flux density detected by a magnetic sensor.
FIG. 8 is a section view illustrating a state of mounting a tire temperature sensor according to a second embodiment of the invention onto a vehicle.
FIG. 9 is a view of an arrangement illustrating magnetic force lines formed between ends of a high permeability magnetic body ribbon and magnetic sensors detecting them.
FIG. 10 is a graph showing a time change of a magnetic flux density detected by a magnetic sensor.
FIG. 11 is a section view illustrating a state of mounting a tire temperature sensor according to a third embodiment of the invention onto a vehicle.
FIG. 12 is a developed view of composite magnets viewed from an inner face of a tire by developing an innerliner into a plane.

FIG. 13 is a section view illustrating a state of mounting a tire temperature sensor according to a fourth embodiment of the invention onto a vehicle.

FIG. 14 is a section view illustrating a state of mounting a tire temperature sensor according to a fifth embodiment of the invention onto a vehicle.

FIG. 15 is a plan view and a side view of a magnetic circuit constituting body.

FIG. 16 is a developed view of magnetic circuit constituting bodies viewed from an inner face of a tire by developing an innerliner into a plane.

FIG. 17 is a view of an arrangement illustrating magnetic force lines from a magnetic circuit constituting body and a magnetic sensor detecting them.

FIG. 18 is a graph showing a time change of a magnetic flux density detected by a magnetic sensor.

FIG. 19 is a section view illustrating a state of mounting a tire temperature sensor according to a sixth embodiment of the invention onto a vehicle.

FIG. 20 is a view of an arrangement illustrating magnetic force lines in a magnetic field leaked from a magnetic circuit constituting body and magnetic sensors detecting them.

FIG. 21 is a graph showing a time change of a magnetic flux density detected by a magnetic sensor during the rotation of a tire.

FIG. 22 is a section view illustrating a state of mounting a tire heat deterioration detection sensor according to an embodiment of the invention onto a vehicle.

FIG. 23 is a perspective view of a tire illustrating an arrangement of composite magnets.

FIG. 24 is a plan view and a side view of composite magnets.

FIG. 25 is a section view and a side view of a heat deterioration magnetic body.

FIG. 26 is a section view and a side view of another embodiment of the heat deterioration magnetic body.

FIG. 27 is a perspective view illustrating a construction of a high permeability magnetic body ribbon.

FIG. 28 is a developed view of composite magnets viewed from an inner face of a tire by developing an innerliner into a plane.

FIG. 29 is a view of an arrangement illustrating magnetic force lines formed between ends of a high permeability magnetic body ribbon and magnetic sensors detecting them.

FIG. 30 is a graph showing a time change of a magnetic flux density detected by a magnetic sensor during the rotation of a tire.

## BEST MODE FOR CARRYING OUT THE INVENTION

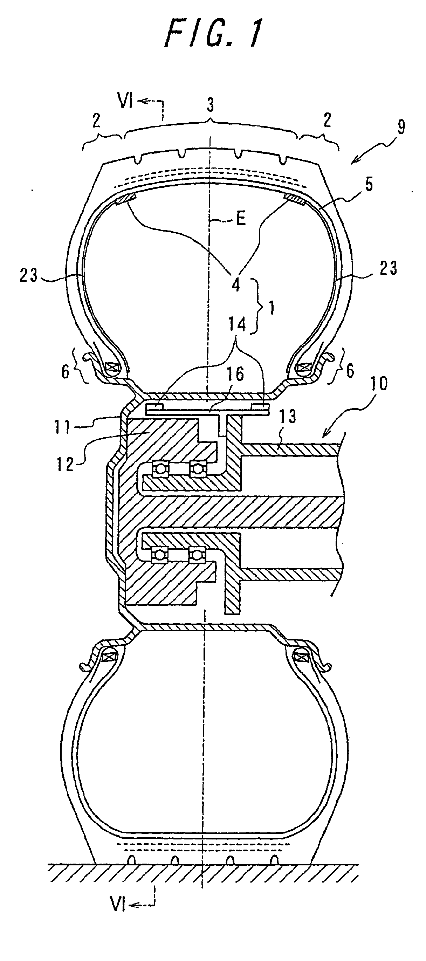

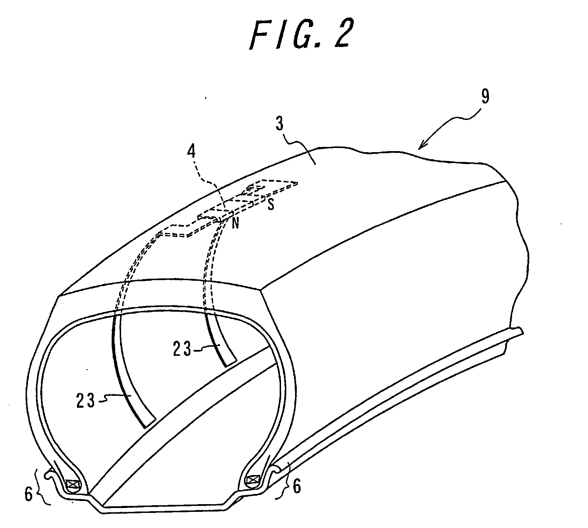

An embodiment of the invention will be described with reference to the accompanying drawings below. Firstly, a tire temperature sensor of a first embodiment is described with reference to FIGS. 1-7. FIG. 1 is a section view illustrating a state of mounting a tire temperature sensor 1 of the first embodiment onto an axle portion of a vehicle, and FIG. 2 is a perspective view of a tire illustrating an arrangement of composite magnets 4. To a radially inside of an innerliner 5 corresponding to each of shoulder portions 2 located at both axially sides of a tread portion 3 of a tire 9 is attached the composite magnet 4 having magnetic poles of reverse polarity at both ends thereof so as to make a direction of a line connecting the both ends in parallel to a circumferential direction, and also high permeability magnetic body ribbons 23 magnetically connected to the magnetic poles of the composite magnet 4 are attached thereto so as to extend in the vicinity of a bead portion 6 of the tire 9.

On the other hand, a hub 12 is born by an axle case 13 constituting a non-rotating portion of an axle 10. The hub 12 is fixed to a rim 11 to be mounted onto the tire 9, and two magnetic sensors 14 are attached to a portion of the axle case 13 just above its axis center at widthwise positions near to both bend portions 6 of the tire. Thus, a tire temperature sensor 1 is constructed with the composite magnets 4, two high permeability magnetic body ribbons 23 and magnetic sensors 14. Moreover, if the rim 11 is made of a magnetic material, the magnetic field generated by the composite magnet 4 is magnetically shielded with the rim 11, which is not detected by the magnetic sensor 14, so that it is necessary to make the rim 11 from a non-magnetic material such as aluminum or the like.

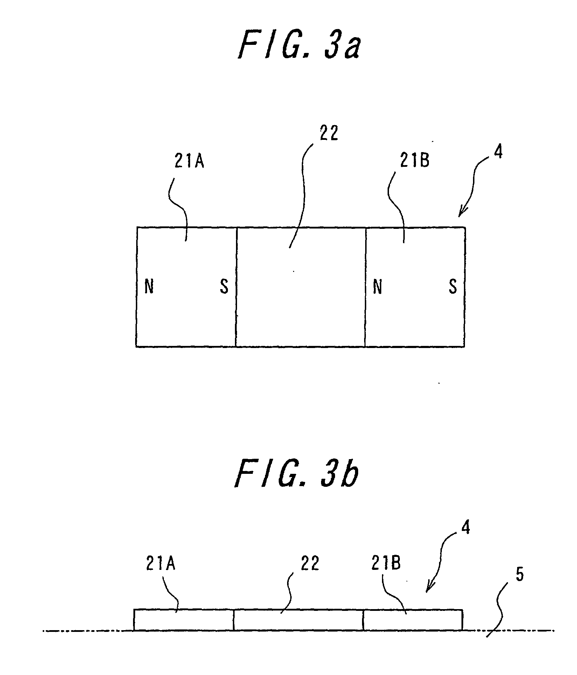

FIG. 3a is a plan view of the composite magnet 4, and FIG. 3b is a side view thereof. The composite magnet 4 is a flat plate and one-side surface thereof is attached to an innerliner 5. The composite magnet 4 is constructed with two permanent magnets 21A, 21B and a temperature-sensitive magnetic body 22 connecting different magnetic poles of these magnets to each other. In FIG. 3a, the temperature-sensitive magnetic body 22 is arranged between S-pole of the left-side permanent magnet 21A and N-pole of the right-side permanent magnet 21B and connects these magnetic poles to each other. On both ends of the composite magnet 4 magnetically connected to the high permeability magnetic body ribbons 23 are arranged the magnetic poles of the permanent magnets 21A, 21B not connected to the temperature-sensitive magnetic body 22, i.e N-pole of the permanent magnet 21A and S-pole of the permanent magnet 21B, respectively.

Each of the permanent magnets 21A, 21b and the temperature-sensitive magnetic body 22 is formed by mixing and dispersing a magnet material or magnetic powder of a high permeability magnetic body, i.e. a soft magnetic material into a compounding rubber and shaping the resulting bond magnetic body into a sheet, so that the composite magnet 4 is made of such a sheet, and hence it has a high flexibility and can deform following to a large deformation of the tire 9.

As the magnetic powder of the bond magnetic body constituting the permanent magnet 21A, 21B can be used cheap ferrite. However, a strong magnetic field can be radiated by using a rare earth magnet such as neodymium-iron-boron, samarium-cobalt, samarium-iron-nitrogen or the like, an alnico magnet and so on, so that the use of them is advantageous.

Also, the temperature-sensitive magnetic body 22 is made from a soft magnetic material having a Curie point near to an upper limit of an acceptable temperature range of the shoulder portion of the tire 9. Therefore, the temperature-sensitive magnetic body 22 has a characteristic that a high permeability is developed at a temperature fairly lower than the Curie point but the magnetization is lost at a temperature exceeding the Curie point to make the permeability very small. When a temperature of a tire portion attached with the composite magnet 4 is Tx, if Tx is a temperature of a normal range fairly lower than the Curie point, the temperature-sensitive magnetic body is high and the magnetic force of the composite magnet 4 is large, while if Tx exceeds the Curie point, the temperature-sensitive magnetic body 22 renders into a non-magnetic body, and hence the magnetic force of the composite magnet 4 as a whole is lost. Such a change of the magnetic force changes the number of magnetic force lines generated from the composite magnet 4.

Moreover, it is preferable that the temperature-sensitive magnetic body 22 has a characteristic of lowering a saturated magnetization in addition to the characteristic of lowering the permeability with the rise of the temperature. This can more improve the sensitivity of the composite magnet 4 to the change of the magnetic force through the temperature.

As the magnetic powder of the bond magnetic body constituting the temperature-sensitive magnetic body 22 having the above characteristics, there can be used Ni based alloys including NiCu, NiAl, NiCr, NiV, Ni-Si, NiTi, NiMo, NiSb and NiZn, Mn-Cu based alloys, Ni-Zn-Fe$_2$O$_4$ based alloys, Mn-Zn-Fe$_2$O$_3$ based alloys, Fe-Ni based alloys, Ni-Cu based alloys, Fe-Ni-Cr-Si based alloys and the like, which are properly selected in accordance with a temperature range to be detected.

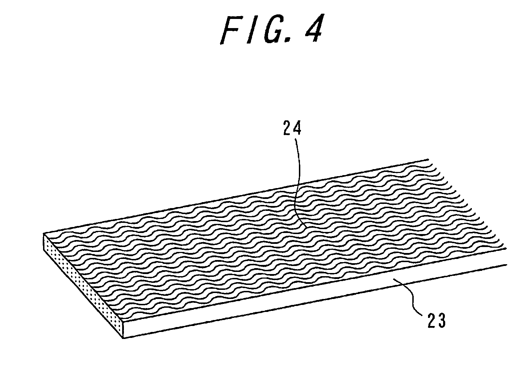

FIG. 4 is a perspective view illustrating the construction of the high permeability magnetic body ribbon 23. In the high permeability magnetic body ribbon 23, many high permeability linear bodies 24 previously formed into wave or hook shape are arranged in a flexible material such as rubber or the like so as to continuously extend in a longitudinal direction. These high permeability linear bodies 24 function magnetic paths for guiding the magnetic force from both ends of the composite magnet 4 to the vicinity of the bead portion 6 of the tire 9, while since the each linear body is subjected to the forming, it can deform following to the tire deformation during the running of the tire without causing unreasonable stress and the length and the gauge of the linear body 24 are not changed by such a deformation and hence the permeability thereof is not changed, so that the linear bodies can transmit the change of the magnetic force of the composite magnet 4 to the vicinity of the bead portion 6 without change.

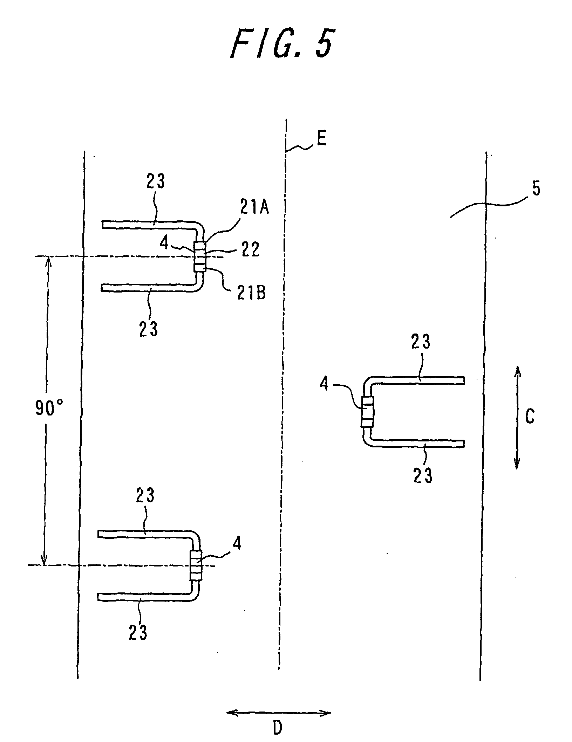

FIG. 5 is a developed view of the composite magnets 4 viewed from an inner face of the tire by developing the innerliner 5 into a plane. A direction shown by an arrow D is a widthwise direction of the tire, and a direction shown by an arrow C is a circumferential direction of the tire, and E is an equatorial plane of the tire 9. In each shoulder portion 2 of the innerliner 5 are arranged a plurality of composite magnets 4 each connected at both ends to the high permeability magnetic body ribbons 23 in one row at given pitches along the circumferential direction. Also, each of the composite magnets 4 is arranged at a posture of directing a straight line connecting the magnetic poles of the permanent magnets 21A, 21B to the circumferential direction of the tire 9. For example, in the embodiment of FIG. 5, the composite magnets 4 are arranged on either side every 4 magnets at a pitch of 90 degrees in the circumferential direction, and also the left-side composite magnets 4 and the right-side composite magnets 4 are arranged at different phases in the circumferential direction.

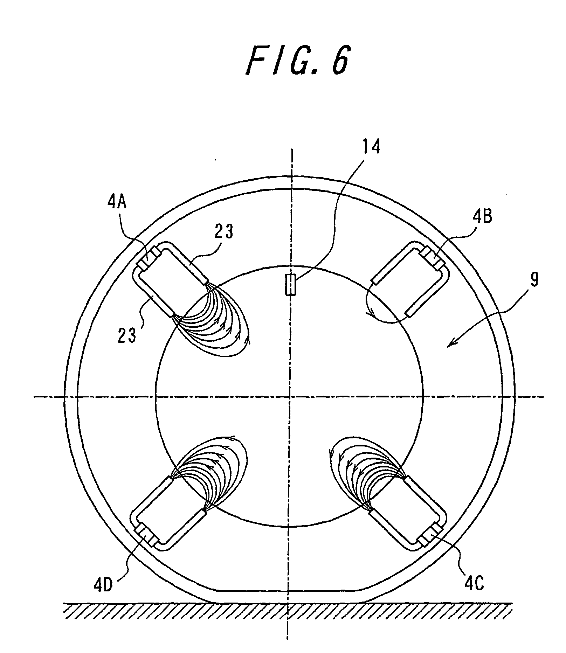

FIG. 6 is a view illustrating an arrangement of magnetic force lines formed between ends of a pair of the high permeability magnetic body ribbons 23 and the magnetic sensor 14 detecting them in an arrow VI-VI of FIG. 1. An example of FIG. 6 shows a state that among temperatures Tx of tire portions attached with four composite magnets 4A, 4B, 4C and 4D arranged at pitches of 90 degrees in the circumferential direction, only a temperature of the tire portion corresponding to 4B is abnormal and temperatures of the other tire portions are normal. At this state, only the magnetic force of the composite magnet 4 abnormally lowers due to the influence of the temperature and the number of the magnetic force lines formed between ends of the high permeability magnetic body ribbons 23 corresponding to the composite magnet 4 is extremely less.

The magnetic sensor 14 is set to a portion of an axle case 13, which is a non-rotating portion of an axle 10 mounted with the tire 9, just above its axis center at a posture of detecting magnetic force lines in a plane perpendicular to the tire axis center and can detect a component in the circumferential direction of the tire among the magnetic force lines radiated from the composite magnet 4 at a normal state of the temperature Tx. Since the magnetic force lines formed between the pair of the high permeability magnetic body ribbons 23 in each composite magnet rotate together with rotation of the tire, when such magnetic force lines successively come across the circumferential position of the magnetic sensor 14 arranged, a peak of a magnetic flux density corresponding to the intensity of the magnetic force lines appears in the magnetic sensor 14.

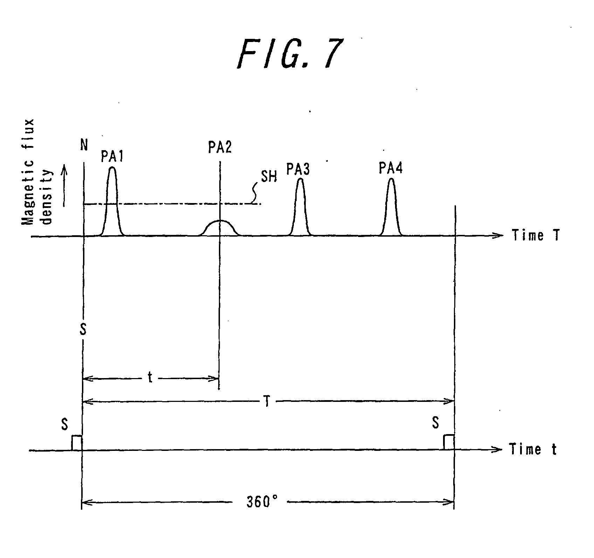

FIG. 7 is a graph showing a time change of the magnetic flux density detected by the magnetic sensor 14 during the rotation of the tire 9, in which a magnitude of the magnetic flux density is plotted on an ordinate and a lapse time T is plotted on an abscissa. Also, FIG. 7 shows a pulse S emitted when the one place on the circumference of the rotating portion of the axle pass a given position of the non-rotating portion of the axle during the rotation of the tire 9 in correspondence with a coordinate of time in which a generation timing of the pulse S is a phase starting point every the rotation of the tire.

Since the magnetic sensor 14 most strongly detects a magnetic field from a portion just above the tire as mentioned above, when the tire 9 is rotated to position the composite magnet 4 arranged in the shoulder portion 2 just above the axis, the magnetic flux density detected by the magnetic sensor 14 shows peaks PA1-PA4. When the temperature Tx is normal, since the magnetic force of the composite magnet is large, the magnetic flux density of the peak is large, but if the temperature Tx is within an abnormal range and the magnetic force of the composite magnet 4 becomes small, the magnitude of the magnetic flux density as shown by the peak PA2 is lower than a given threshold value SH. In the latter case, a signal on the occurrence of abnormality is transmitted from the magnetic sensor 14 to the vehicle body side, whereby the abnormality can be known to a driver through, for example, an alarm device arranged in the vehicle body side.

The method of corresponding each peak of continuously developed magnetic flux densities to each composite magnet 4 arranged on the tire 9 will be described with reference to the peak PA2 below. When a time from a detection of the pulse S at the phase starting point to a detection of the peak PA2 is t and a time between adjoining pulses S is T, a phase $\theta A2$ of the peak PA2 can be determined by an equation (1) through a proportional calculation. Since the rotating position of the tire generating the pulse S is clear, the composite magnet 4 located just above the axis when the tire is further rotated from the above rotating position by $\theta A2$ can be related to the peak PA2 of the magnetic flux density.

$$\theta A2 = (t/T) \times 360 \qquad (1)$$

Thus, the fact that the temperature of the tire 9 abnormally rises can be detected by using the tire temperature sensor 1 of this embodiment. And also, there can be checked the magnetic field from what composite magnet 4 is abnormal, from which a portion of the tire abnormally raising the temperature can be specified. Further, when a relational expression showing a relation between a magnitude of a peak of the magnetic flux density to be detected and a temperature Tx is previously provided in addition to the judgment of the temperature abnormality, the temperature Tx can be determined in real time by back calculation from the magnitude of the peak of the magnetic flux density detected, and hence the value of the temperature measured itself can be transmitted to the driver.

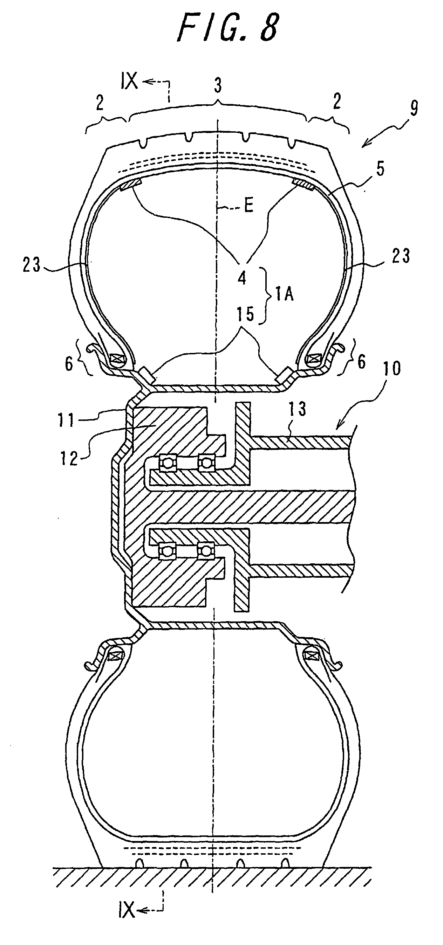

Then, a tire temperature sensor of a second embodiment will be described with reference to FIGS. 8-10. FIG. 8 is a section view illustrating a state of mounting a tire temperature sensor 1A of the second embodiment onto an axle portion of a vehicle. To a radially inside of an innerliner 5 corresponding to each of shoulder portions 2 located at both axially sides of a tread portion 3 of a tire 9 is attached the composite magnet 4 having magnetic poles of reverse polarity at both ends thereof so as to make a direction of a line connecting the both ends in parallel to a circumferential direction, and also high permeability magnetic body ribbons 23 magnetically connected to the magnetic poles of the composite magnet 4 are attached thereto so as to extend in the vicinity of a bead portion 6 of the tire 9.

The construction and arrangement of the composite magnets 4 and high permeability magnetic body ribbons shown in this embodiment are the same as described in the first embodiment shown in FIGS. 2-5, so that the detailed explanation thereof is omitted for the sake of convenience.

A hub 12 is born by an axle case 13 constituting a non-rotating portion of an axle 10 and a rim 11 to be mounted with the tire 9 is fixed to the hub 12. However, two magnetic sensors 15 are attached to widthwise inner portions of the rotating rim 11 mounted with bead portions 6 of the tire 9 near to the bead portions, which is different from the first embodiment.

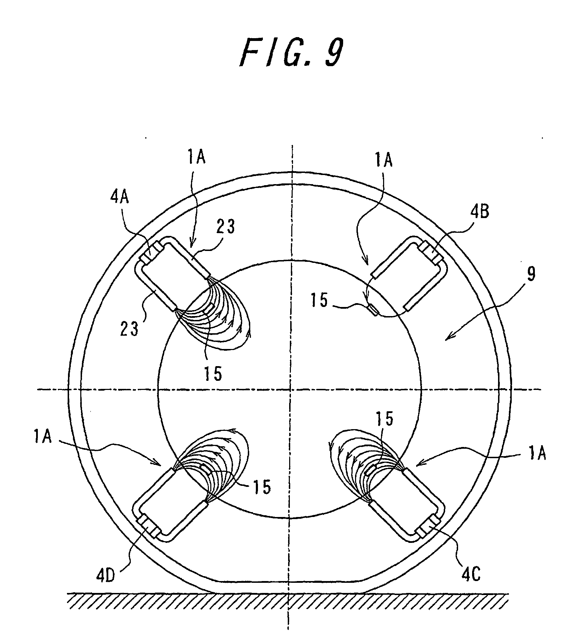

FIG. 9 is a view illustrating an arrangement of magnetic force lines formed between ends of a pair of the high permeability magnetic body ribbons 23 toward the bead portions and the magnetic sensor 14 detecting them in an arrow IX-IX of FIG. 8. The magnetic sensor 15 is fixed to a circumferential position on the rim 11 corresponding to each of the composite magnets 4A, 4B, 4C and 4D, respectively, so that a relative position relation therebetween becomes irrelevant to the rotating angle position of the tire. The tire temperature sensor 1A is constructed with a set of one composite magnet, two high permeability magnetic body ribbons 23 located at both ends thereof and the magnetic sensor 15 corresponding thereto.

FIG. 9 exemplifies a state that among temperatures Tx of tire portions attached with four composite magnets 4A, 4B, 4C and 4D arranged at pitches of 90 degrees in the circumferential direction, only a temperature of the tire portion corresponding to 4B is abnormal and temperatures of the other tire portions are normal. At this state, the number of the magnetic force lines formed between ends of the high permeability magnetic body ribbons corresponding to the composite magnet 4 is extremely less as described in the previous explanation.

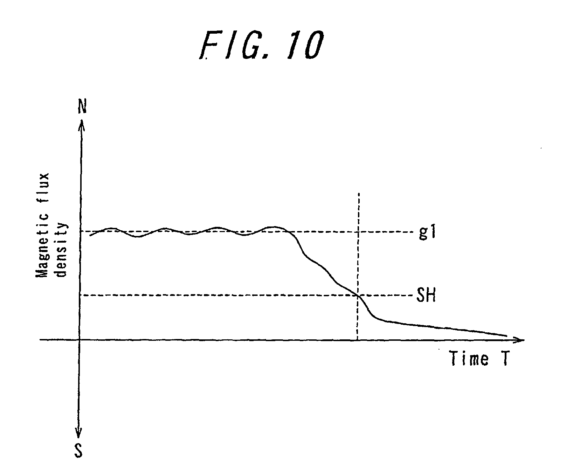

FIG. 10 is a graph showing a time change of the magnetic flux density detected by the magnetic sensor 15 corresponding to the composite magnet 4B during the running of the vehicle, in which a magnitude of the magnetic flux density is plotted on an ordinate and a lapse time T is plotted on an abscissa. If the temperature Tx of the tire portion attached with the composite magnet 4B is normal, since the magnetic force of the composite magnet 4 is large, the magnetic sensor 15 detects a magnetic flux density of, for example, a g1 level, but if the temperature Tx is within an abnormal range and the magnetic force of the composite magnet 4 becomes small, the magnetic flux density detected by the magnetic sensor 15 is lower than a given threshold value SH. In the latter case, a signal on the occurrence of abnormality is transmitted from the magnetic sensor 15 to the vehicle body side via radio waves, whereby the abnormality can be known to a driver through, for example, an alarm device arranged in the vehicle body side.

Even in the tire temperature sensor 1A of this embodiment, the abnormal rise of the temperature of the tire 9 is detected or the tire temperature is detected by using such a sensor, whereby the detected results can be transmitted to the driver likewise the case of the first embodiment.

In these embodiments, the composite magnet 4 is constructed with two permanent magnets 21A, 21B and the temperature-sensitive magnetic body 22. Alternatively, the composite magnet may be constructed by connecting one temperature-sensitive magnetic body to one end of one permanent magnet. In the latter case, both the magnetic poles of the composite magnet are formed at the other end of the permanent magnet and an end of the temperature-sensitive magnetic body not connected to the permanent magnet. Furthermore, the temperature-sensitive magnetic bodies may be connected to both ends of the one permanent magnet, in which both the magnetic poles of the composite magnet are formed at ends of the temperature-sensitive magnetic bodies not connected to the permanent magnet. Further, there may be taken various forms of properly joining any number of permanent magnets and any number of temperature-sensitive magnetic bodies side by side. Moreover, the composite magnet 4 may be constructed with only a permanent magnet having a characteristic of lowering a magnetic force neat to a given temperature, but it is necessary to take notice of sufficiently ensuring a sensitivity to this temperature.

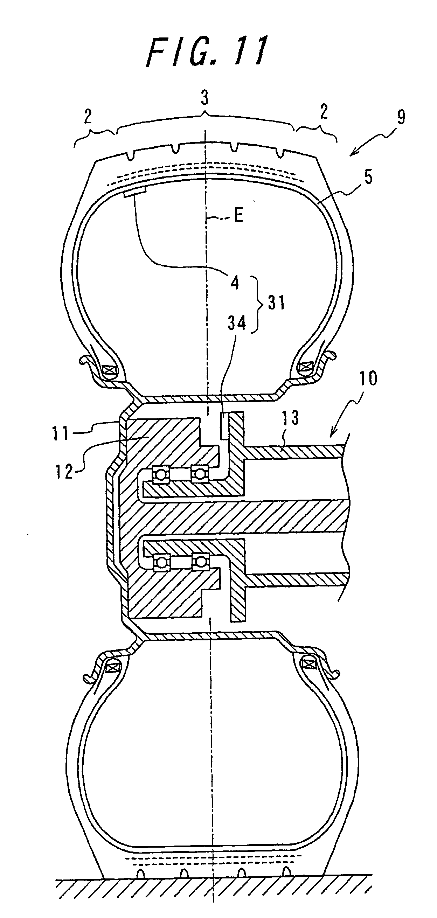

Then, a third embodiment will be described with reference to FIGS. 11-12. FIG. 11 is a section view illustrating a state of attaching a tire temperature sensor 31 of the third embodiment to an axle portion of a vehicle. A hub 12 is born by an axle case 13 constituting a non-rotating portion of an axle 10 and a rim 11 mounted with a tire 9 is fixed to the hub 12. To a radially inside of an innerliner 5 corresponding to each of shoulder portions 2 located at both axially sides of a tread portion 3 of a tire 9 is attached a composite magnet 4, while a magnetic sensor 34 is attached to a portion of the axle case 13 located just above an axis center thereof, so that the tire temperature sensor 31 is constructed with the composite magnet 4 and the magnetic sensor 34. Also, the structure of the composite magnet 4 is the same as shown in FIG. 3, and the detailed explanation thereof is the same as in the first and second embodiments and is not repeated here.

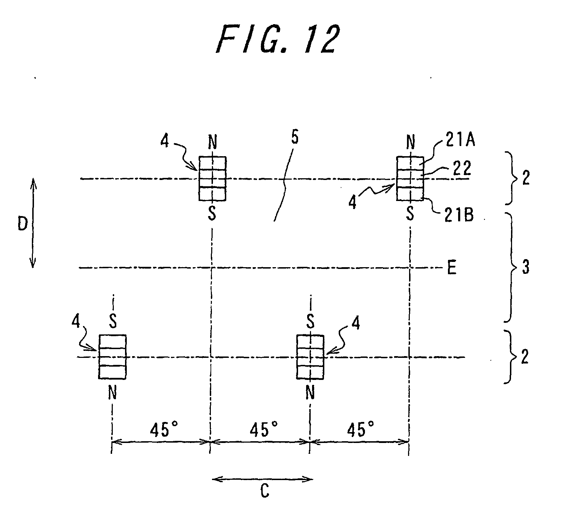

FIG. 12 is a developed view of the composite magnets 4 viewed from an inner face of the tire by developing the innerliner 5 into a plane. A direction shown by an arrow D is a widthwise direction of the tire, and a direction shown by an arrow C is a circumferential direction of the tire, and E is an equatorial plane of the tire 9. In each shoulder portion 2 of the innerliner 5 are arranged a plurality of composite magnets 4 in one row at given pitches along the circumferential direction, in which the arrangements at the left and right shoulder portions 2 along the circumferential direction are set so as to shift a phase only by a half pitch. Also, each of the composite magnets 4 is arranged at a posture of including a straight line connecting magnetic poles of permanent magnets 21A, 21B in a meridional plane of the tire 9. For example, in the embodiment of FIG. 12, the composite magnets 4 are arranged on either side every 4 magnets at pitches of 90 degrees in the circumferential direction, and also the left-side composite magnets 4 and the right-side composite magnets 4 are arranged so as to shift the phase by 45 degrees at the rotating angle position in the circumferential direction and oppose the directions of the magnetic poles to each other. Moreover, the meridional plane of the tire means a plane passing through the rotating axis center of the tire 9.

The tire temperature sensor 31 of the third embodiment is different from the tire temperature sensor 1 of the first embodiment in points that the high permeability magnetic body ribbons 23 arranged in the tire temperature sensor 1 are not used and that the arranging direction of the composite magnet 4 differs to that of the first embodiment. Although the formation of the magnetic field slightly differs due to the above differences, the method of estimating a temperature of a tire portion attached with the composite magnet 4 from the peak of the magnetic flux density detected by the magnetic sensor 31, the method of detecting the abnormality of the temperature and the like are the same as previously described in the first embodiment with reference to FIG. 7, and the detailed explanation thereof is omitted here for the sake of convenience.

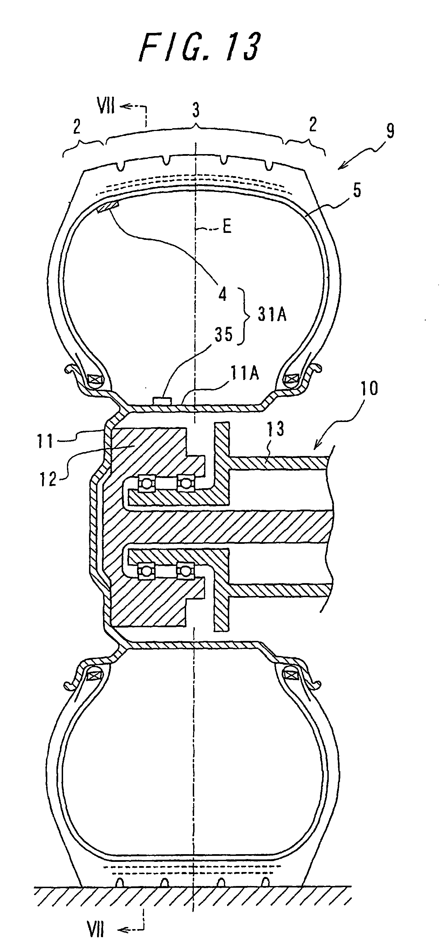

FIG. 13 is a section view illustrating a state of attaching a tire temperature sensor 31A of a fourth embodiment to an axle portion of a vehicle. To a radially inside of an innerliner 5 corresponding to a shoulder portion 2 of a tire 9 is attached a composite magnet 4, while a hub 12 is born by an axle case 13 constituting a non-rotating portion of an axle 10 and a rim 11 mounted with the tire 9 is fixed to the hub 12, and a magnetic sensor 35 is attached to a rim well portion 11A of the rim 11, and hence the tire temperature sensor 31A is constructed with the composite magnet 4 and the magnetic sensor 35.

The construction and arrangement of the composite magnets 4 are the same as described in the third embodiment, and the detailed explanation thereof is omitted. The tire temperature sensor 31A of this embodiment is different from the temperature sensor 31 of the third embodiment in a point that the same number of the magnetic sensors 35 as the number of the composite magnets 4 are attached to the rotating rim and arranged inside the respective composite magnets 4 in the radial direction. Thus, the magnetic sensor 35 can continuously detect the magnetic field as far as the corresponding composite magnet 4 has a magnetism and hence the temperature data can be continuously measured.

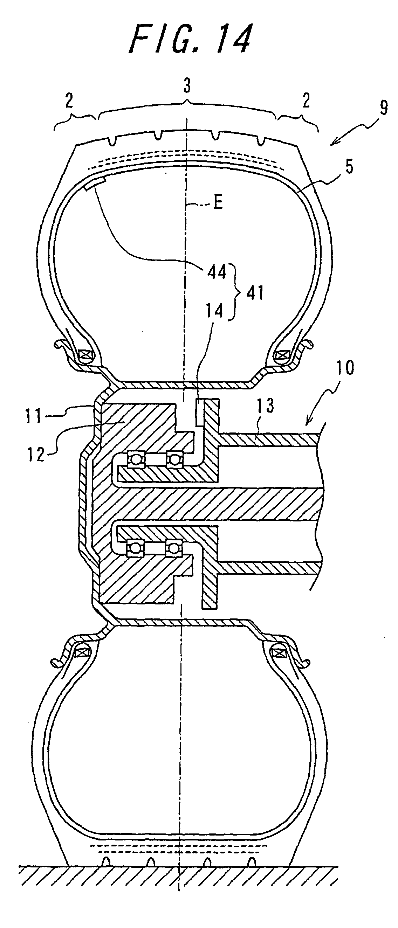

Next, a tire temperature sensor of a fifth embodiment will be described with reference to FIGS. 14-18. FIG. 14 is a section view illustrating a state of mounting the tire temperature sensor 41 of this embodiment onto an axle portion of a vehicle. A hub 12 is born by an axle case 13 constituting a non-rotating portion of an axle 10, and a rim 11 mounted with the tire 9 is fixed to the hub 12. To a radially inside of an innerliner 5 corresponding to each of shoulder portions 2 located at both axially sides of a tread portion 3 of a tire 9 is attached a magnetic circuit constituting body 44, while a magnetic sensor 14 is attached to a portion of the axle case 13 located just above an axis center thereof, so that the tire temperature sensor 41 is constructed with the magnetic circuit constituting body 44 and the magnetic sensor 14. In this case, it is necessary that the rim 11 is made from a non-magnetic material such as aluminum or the like as previously mentioned.

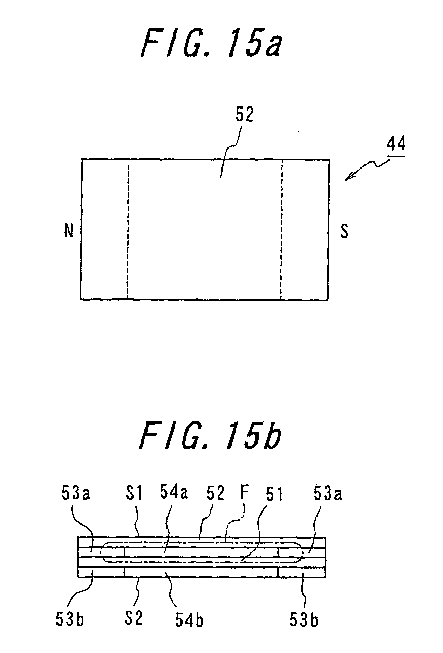

FIG. 15a is a plan view of the magnetic circuit constituting body 44, and FIG. 15b is a side view thereof. S1 is a face for attaching to the innerliner 5 of the tire 9, and S2 is a face opposing to the attaching face S1, i.e. a face facing to the axle. The magnetic circuit constituting body 44 has a structure of laminating four rectangular layers between the faces S1 and S2. When these layers are first layer to fourth layer from the side of the face S1 in sequence, the first layer is a temperature-sensitive magnetic body sheet made of a temperature-sensitive magnetic body 52 changing a permeability in accordance with a temperature, and the third layer is a permanent magnet sheet made of a permanent magnet 51. Also, the second layer is constructed with a magnetic connecting yoke 51a arranged at each end of the rectangle along its longitudinal direction and made from a soft magnetic material having a high permeability and a magnetic insulating sheet 54a filling a region between the magnetic connecting yokes 53a, and the fourth layer is constructed with radiating yokes 53b and a magnetic insulating sheet 54b in a similar fashion.

Both magnetic poles of the permanent magnet 51 are arranged at both ends of the rectangle in its longitudinal direction, and a closed magnetic circuit F is formed by the permanent magnet 51, the temperature-sensitive magnetic body 52 and both magnetic connecting yokes 53a magnetically connecting them. Also, the radiating yoke 53b is arranged for concentrically radiating a magnetic field leaked from the magnetic circuit F, while the magnetic insulating sheet 54a, 54b is made of a non-magnetic rubber sheet and arranged for ensuring a magnetic insulation between the magnetic bodies.

Each of the permanent magnet 51, the temperature-sensitive magnetic body 52, the magnetic connecting yoke 53a and the radiating yoke 53b is formed from a sheet of a bond magnetic body obtained by mixing and dispersing magnetic powder into a compounding rubber, while the magnetic insulating sheet 54a, 54b is formed from a rubber sheet containing no magnetic powder, so that the magnetic circuit constituting body 44 is formed by laminating these sheets into a four layer structure. Thus, the magnetic circuit constituting body 44 obtained by laminating these rubber sheets has a high flexibility and can deform following to a large deformation of the tire 9.

As the magnetic powder of the bond magnetic body constituting the permanent magnet 51 can be used a cheap ferrite, but the use of a rare earth magnet such as neodymium-iron-boron, samarium-cobalt, samarium-iron-nitrogen or the like, an alnico magnet and the like is advantageous because they can radiate a strong magnetic field.

Also, the temperature-sensitive magnetic body 52 is made from a soft magnetic material having a Curie point neat to an upper limit of an acceptable temperature range in the shoulder portion of the tire 9. The temperature-sensitive magnetic body 52 has a characteristic that a high permeability is developed at a temperature fairly lower than the Curie point but the magnetization is lost at a temperature exceeding the Curie point and hence the permeability becomes very small. When the temperature of the tire portion attached with the magnetic circuit constituting body 44 is Tx, if Tx is a temperature of a normal range fairly lower than the Curie point, since the permeability of the temperature-sensitive magnetic body 52 is high, the magnetic flux density in the magnetic circuit F is large and the magnetic flux leaked from the magnetic circuit constituting body 44 hardly occurs, but if Tx exceeds the Curie point, the temperature-sensitive magnetic body 52 changes into a non-magnetic body and a part of the magnetic circuit F is at substantially an opened state and hence the leakage magnetic flux increases. Such a leakage magnetic flux is derived by the yoke 53b to generate magnetic force lines directing into the radial direction of the tire.

As the magnetic powder of the bond magnetic body constituting the temperature-sensitive magnetic body 52 having the above characteristics, there can be used Ni based alloys including NiCu, NiAl, NiCr, NiV, Ni-Si, NiTi, NiMo, NiSb and NiZn, Mn-Cu based alloys, Ni-Zn-$Fe_2O_4$ based alloys, Mn-Zn-$Fe_2O_3$ based alloys, Fe-Ni based alloys, Ni-Cu based alloys, Fe-Ni-Cr-Si based alloys and the like, which are properly selected in accordance with a temperature range to be detected.

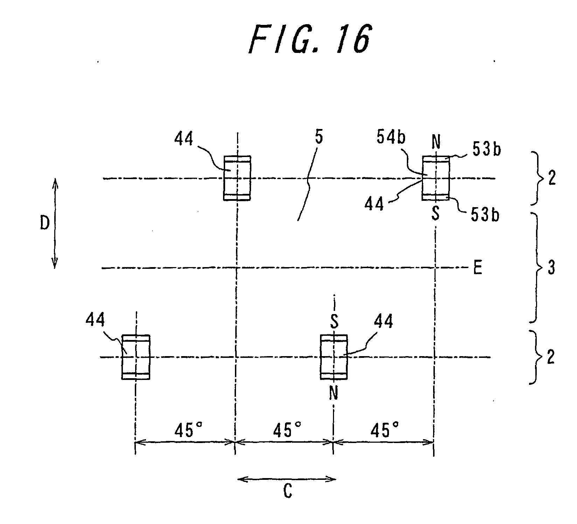

FIG. 16 is a developed view of the magnetic circuit constituting bodies 44 viewed from an inner face of the tire by developing the innerliner 5 into a plane. A direction shown by an arrow D is a widthwise direction of the tire, and a direction shown by an arrow C is a circumferential direction of the tire, and E is an equatorial plane of the tire 9. In each shoulder portion 2 of the innerliner 5 are arranged a plurality of magnetic circuit constituting bodies 44 in one row at given pitches along the circumferential direction, in which the arrangements at the left and right shoulder portions 2 along the circumferential direction are set so as to shift a phase only by a half pitch. Also, each of the magnetic circuit constituting bodies 44 is arranged at a posture of including a straight line connecting magnetic poles of permanent magnet 51 in a meridional plane of the tire 9. For example, in the embodiment of FIG. 16, the magnetic circuit constituting bodies 44 are arranged on either side every 4 magnets at a pitch of 90 degrees in the circumferential direction with respect to the equatorial plane, and also the left-side magnetic circuit constituting bodies 44 and the right-side magnetic circuit constituting bodies 44 are arranged so as to shift the phase by 45 degrees at the rotating angle position in the circumferential direction and oppose the directions of the magnetic poles to each other.

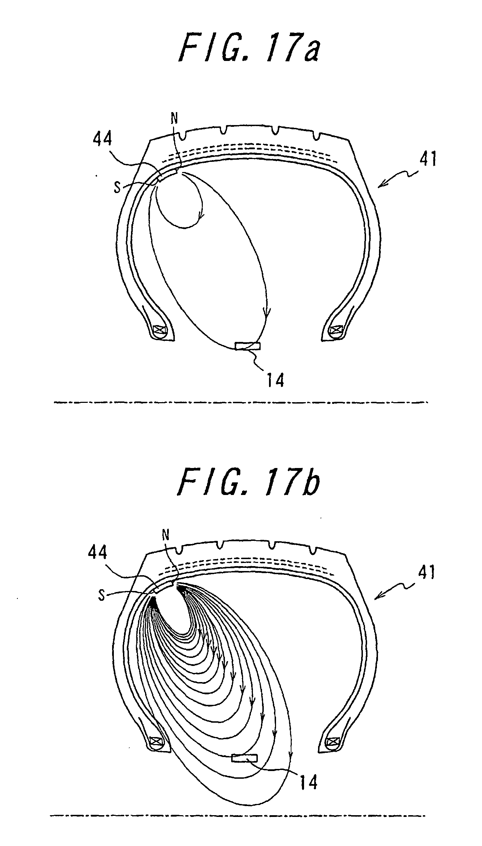

FIGS. 17a and 17b are views illustrating an arrangement of magnetic force lines based on the magnetic field leaked from the magnetic circuit constituting body 44 and the magnetic sensor 14 detecting them on a meridional plane of the tire. FIG. 17a shows magnetic force lines at a state that the temperature Tx is within a normal range, and FIG. 17b shows magnetic force lines at a state that the temperature Tx abnormally rises. The magnetic sensor 14 is set on a portion of the axle case 13, which is a non-rotating portion of the axle 10 mounted with the tire 9, just above the axis center thereof at a posture that it detects magnetic force lines extending in the meridional plane of the tire, and can detect magnetic force lines radiated in the meridional plane of the tire among magnetic force lines radiated from the radiating yoke 53b, which is arranged inward from the magnetic circuit constituting body 44 in the radial direction of the tire, at the state that the temperature Tx abnormally rises. Moreover, the portion of the axle case 13 to be attached with the magnetic sensor 14 is not limited to the portion just above the axis center thereof, but it is sufficient to attach the magnetic sensor 14 so as to detect the leakage magnetic field when the magnetic circuit constituting body 44 moves from a ground contact portion of the tire and comes into a rotating angle position not subjected to an influence of at least a ground contacting deformation. In this case, the distance between the magnetic circuit constituting body 44 existing at the given rotating angle position and the magnetic sensor 14 is not affected by the change of axle load and the vibrations and hence the magnetic flux density detected is not also dependent on these influences and the measured value of the tire temperature can be rendered into a higher precision. Therefore, it is preferable to attach the magnetic sensor 14 onto an upper portion of the axle case 13.

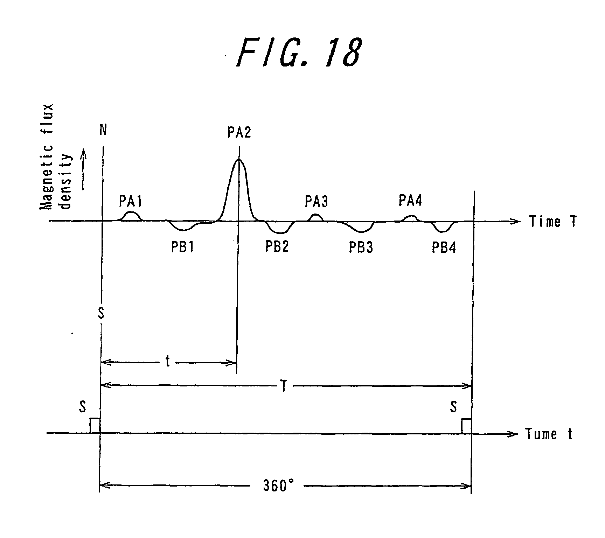

FIG. 18 is a graph showing a time change of the magnetic flux density detected by the magnetic sensor 14 during the rotation of the tire 9, in which a magnitude of the magnetic flux density is plotted on an ordinate and a lapse time is plotted on an abscissa. Also, FIG. 18 shows a pulse S emitted when the one place on the circumference of the rotating portion of the axle pass a given position of the non-rotating portion of the axle during the rotation of the tire 9 in correspondence with a coordinate of time in which a generation timing of the pulse S is a phase starting point every the rotation of the tire.

Since the magnetic sensor 14 detects most strongly the magnetic field from the portion just above the tire as previously mentioned, when the magnetic circuit constituting body 44 arranged on the shoulder portion 2 is positioned just above the axle by the rotation of the tire 9, the magnetic flux density detected by the magnetic sensor 14 shows peaks PA1-PA4, PB1-PB5. When the temperature Tx is normal, the magnetic field leaked from the magnetic circuit constituting body 44 is hardly caused and hence the magnitude of the magnetic flux density in the peak is substantially zero. However, when the temperature Tx arrives at the abnormal range and the magnetic field leaked from the magnetic circuit constituting body 44 becomes large, the magnitude of the magnetic flux density as shown by the peak PA2 exceeds the threshold value, so that the temperature of the tire portion corresponding to the magnetic circuit constituting body can be determined by measuring the magnitude of the magnetic field in such a peak and further the abnormality of the temperature can be judged.

The method of corresponding each peak of the continuously developed magnetic flux densities to the respective magnetic circuit constituting body on the tire 9 is carried out in the same manner as described in the first embodiment, so that the detailed explanation thereof is omitted.

Further, the left-side magnetic circuit constituting bodies 44 and the right-side magnetic circuit constituting bodies 44 are arranged so as to shift the phase by 45 degrees, so that the temperature abnormality caused in what magnetic circuit constituting body 44 among the left-side and right-side bodies can be discriminated from the phase of the peak in the magnetic flux density. Also, the directions of the magnetic poles of the left and right magnetic circuit constituting bodies 44 are opposite to each other, so that the judgment of the left and right positions on the magnetic circuit constituting body 44 can be confirmed by utilizing a feature that the peaks of the magnetic flux densities through the magnetic fields leaked from these magnetic circuit constituting bodies 44 appear in contradiction to positive and negative.

Thus, the abnormal rise of the temperature in the tire 9 can be detected by using the tire temperature sensor 41 of this embodiment. Also, the abnormality of the magnetic field leaked from what magnetic circuit constituting body can be checked, so that the tire portion abnormally raising the temperature can be specified. Further, when a rational expression shown a relation between a magnitude of a peak of the magnetic flux density to be detected and a temperature $T_x$ is previously provided in addition to the judgment of the temperature abnormality, the temperature $T_x$ can be determined by back calculation from the magnitude of the peak magnetic flux density detected in real time, and the value of the measured temperature itself can be transmitted to a driver.

In order to discriminate each place arranged with the magnetic circuit constituting body 44, the positions of the magnetic circuit constituting bodies 44 in the circumferential direction may be shifted with each other, or the directions of the magnetic poles may be rendered in contradiction to positive and negative even when the magnetic circuit constituting bodies 44 are arranged at the same position in the circumferential direction as previously mentioned.

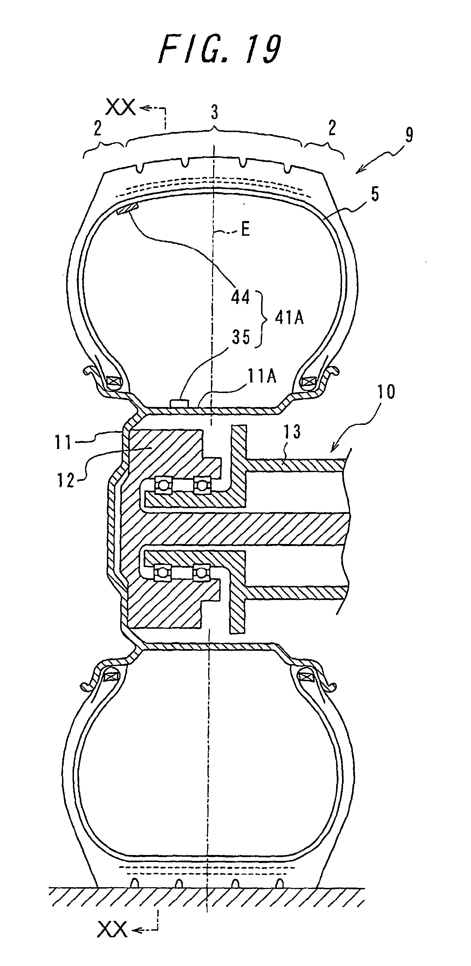

Then, a tire temperature sensor of a sixth embodiment will be described with reference to FIGS. 19-21. FIG. 19 is a section view illustrating a state of mounting a tire temperature sensor 41A of this embodiment onto an axle portion of the vehicle. A hub 12 is born by an axle case 13 constituting a non-rotating portion of an axle 10, and a rim 11 mounted with a tire 9 is fixed to the hub 12. To a radially inside of an innerliner 5 corresponding to each of shoulder portions 2 located at both axially sides of a tread portion 3 of the tire 9 are attached plural magnetic circuit constituting bodies 44, while a magnetic sensor 35 is attached to a rim well portion 11A of the rim 11. The magnetic sensor 35 is set by the same number as the number of the magnetic circuit constituting bodies 44 at circumferential positions corresponding to the respective magnetic circuit constituting bodies 44. The construction and arrangement of the magnetic circuit constituting bodies 44 are the same as in the fifth embodiment, and the detailed explanation thereof is omitted here.

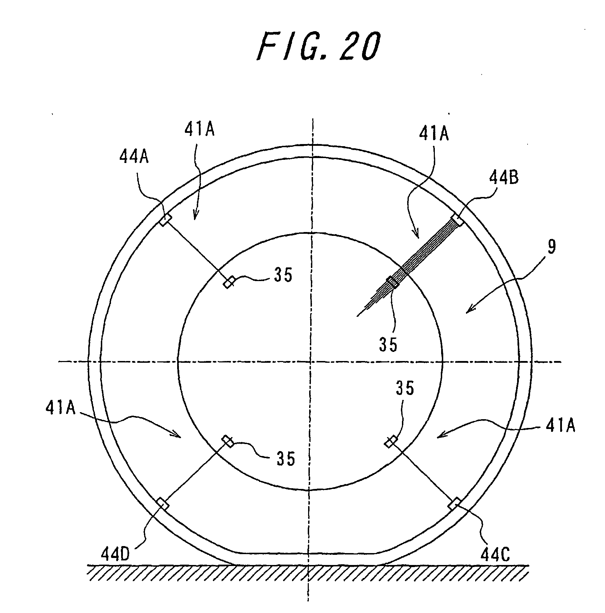

FIG. 20 is a view illustrating an arrangement of magnetic force lines based on the magnetic field leaked from the magnetic circuit constituting body 44 and the magnetic sensor 35 detecting them along an arrow XX-XX of FIG. 19. The magnetic sensors 35 are fixed to the rim 11 at circumferential positions corresponding to the four magnetic circuit constituting bodies 44A, 44B, 44C and 44D, in which a relative relation among these circumferential positions is fixed irrespectively of the rotating angle position of the tire. A set of the each magnetic circuit constituting body 44 and the magnetic sensor corresponding thereto forms a tire temperature sensor 41A.

FIG. 20 exemplifies a state that among temperatures $T_x$ of tire portions attached with four magnetic circuit constituting bodies 44A, 44B, 44C and 44D arranged at pitches of 90 degrees in the circumferential direction, only a temperature of the tire portion corresponding to 44B is abnormal and temperatures of the other tire portions are normal. At this state, the number of the magnetic force lines in correspondence with the magnetic circuit constituting body 44B is extremely large as described in the previous explanation.

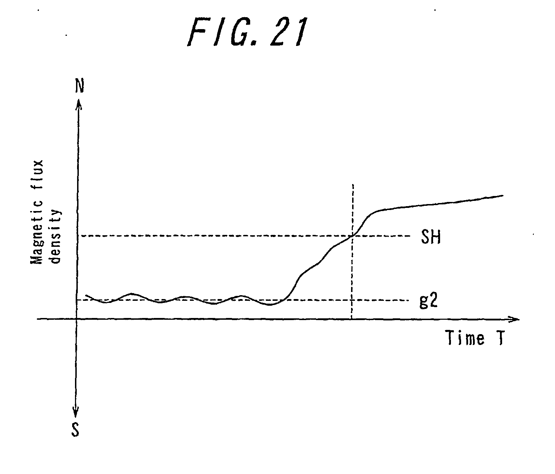

FIG. 21 is a graph showing a time change of the magnetic flux density detected by the magnetic sensor 35 during the running of the vehicle, in which a magnitude of the magnetic flux density is plotted on an ordinate and a lapse time is plotted on an abscissa. When the temperature $T_x$ of the tire portion attached with the magnetic circuit constituting body 44 is normal, the magnetic field leaked from the magnetic circuit constituting body 44 is small and the magnetic sensor 35 detects a magnetic flux density of, for example, a g2 level. However, when the temperature $T_x$ arrives at the abnormal range and the magnetic field leaked from the magnetic circuit constituting body 44 becomes large, the magnetic flux density detected by the magnetic sensor 35 becomes larger over a given threshold value SH. In the latter case, a signal on the occurrence of abnormality is transmitted from the magnetic sensor 35 to the vehicle body side via radio waves, whereby the abnormality can be known to a driver through, for example, an alarm device arranged in the vehicle body side.

Even in the tire temperature sensor 41A of the sixth embodiment, the abnormal rise of the temperature of the tire 9 is detected or the tire temperature is detected by using such a sensor, whereby the detected results can be transmitted to the driver. Further, the information of the temperature can be continuously detected even at any rotating positions of the tire.

Although the composite magnet 4 or the magnetic circuit constituting body 44 is arranged in the shoulder portion 2 in the first to sixth embodiments, it may be arranged in a tread portion 3, a sidewall portion or a bead portion in accordance with the tire portion wanting to detect the temperature information. Further, the magnetic circuit constituting bodies may be arranged at plural places selected from these portions to simultaneously detect the temperature information from these places. As the magnetic sensor 14, 15 used in these embodiments, it is preferable to use a MI sensor (magnetic impedance sensor) capable of detecting a weak magnetic field in a high sensitivity. Also, a MR sensor (magnetic resistor sensor) may be used in accordance with the required sensitivity. Further, the magnitude of the magnetic field may be detected by disconnection of a reed switch in which a contact point disconnects in accordance with the magnitude of the magnetic field. In the latter case, a plurality of reed switches conducting disconnection at different levels of the magnetic field are arranged to know disconnection state of each reed switch, whereby the magnitude of the magnetic field can be specified to be what level.

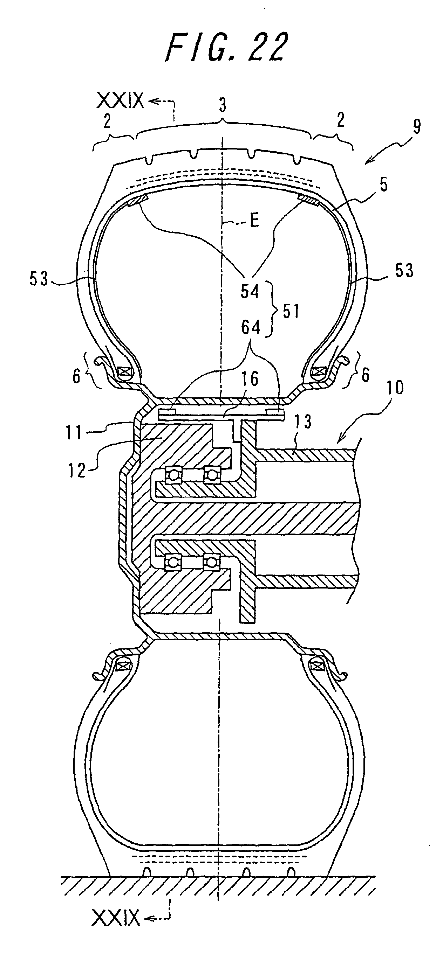

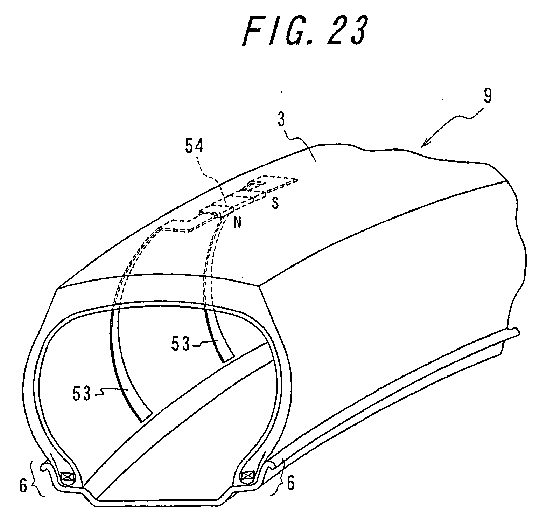

The tire temperature sensor according to the invention is described with respect to the aforementioned first to sixth embodiments. Then, an embodiment of the tire heat deterioration detection sensor according to the invention will be described with reference to FIGS. 22 to 30. FIG. 22 is a section view illustrating a state of mounting a tire heat deterioration detection sensor 51 of this embodiment onto an axle portion of a vehicle, and FIG. 23 is a perspective view of a tire showing an arrangement of a composite magnet 54. To a radially inside of an innerliner 5 corresponding to each of shoulder portions 2 located at both axially sides of a tread portion 3 of a tire 9 is attached the composite magnet 54 having magnetic poles of reverse polarity at both ends thereof so as to make a direction of a line connecting the both ends in parallel to a circumferential direction, and also high permeability magnetic body ribbons 53 magnetically connected to the magnetic poles of the composite magnet 54 are attached thereto so as to extend in the vicinity of a bead portion 6 of the tire 9.

On the other hand, a hub 12 is born by an axle case 13 constituting a non-rotating portion of an axle 10. The hub 12 is fixed to a rim 11 mounted with the tire 9, and two magnetic sensors 64 are attached to a portion of the axle case 13 just above its axis center at widthwise positions near to both bend portions 6 of the tire. Thus, a tire heat deterioration detection sensor 51 is constructed with the composite magnets 54, two high permeability magnetic body ribbons 53 and magnetic sensors 54. Moreover, if the rim 11 is made of a magnetic material, the magnetic field generated by the composite magnet 54 is magnetically shielded with the rim 11, which is not detected by the magnetic sensor 64, so that it is necessary to make the rim 11 from a non-magnetic material such as aluminum or the like.

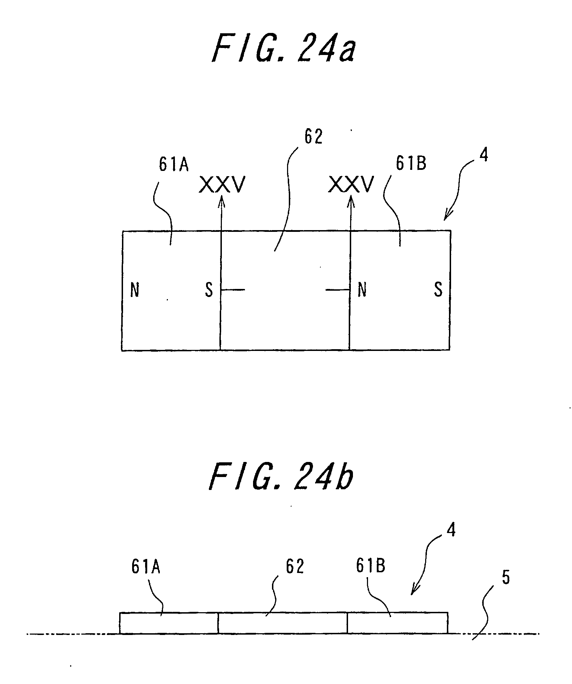

FIG. 24a is a plan view of the composite magnet 54, and FIG. 24b is a side view thereof. The composite magnet 54 is a flat plate, in which one-side surface thereof is attached to an innerliner 5, and is constructed with two permanent magnets 61A, 61B and a heat deterioration magnetic body 62 connecting different magnetic poles of these magnets to each other. In FIG. 24a, the heat deterioration magnetic body 62 is arranged between S-pole of the left-side permanent magnet 61A and N-pole of the right-side permanent magnet 61B and connects these magnetic poles to each other. On both ends of the composite magnet 54 magnetically connected to the high permeability magnetic body ribbons 53 are arranged the magnetic poles of the permanent magnets 61A, 61B not connected to the heat deterioration magnetic body 62, i.e. N-pole of the permanent magnet 61A and S-pole of the permanent magnet 61B, respectively.

Each of the permanent magnets 61A, 61b is formed by mixing and dispersing magnetic powder made of a magnet material into a compounding rubber to form a sheet of a bond magnetic body. As the magnetic powder can be used cheap ferrite. However, a strong magnetic field can be radiated by using a rare earth magnet such as neodymium-iron-boron, samarium-cobalt, samarium-iron-nitrogen or the like, an alnico magnet and so on, so that the use of them is advantageous.

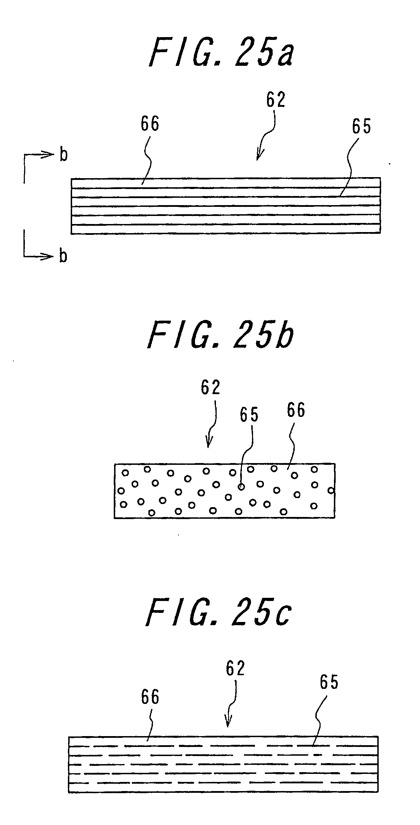

A constructional example of the heat deterioration magnetic body 62 is described below. FIG. 25a is a section view of a heat deterioration magnetic body 62 in correspondence to an arrow XXV-XXV of FIG. 24, and FIG. 25b is a side view of the heat deterioration magnetic body 62 in correspondence to an arrow b-b of FIG. 25a. The heat deterioration magnetic body 62 is constructed with a plurality of high permeability wires 65 arranged along a direction of magnetization and a wire corroding substance 66 covering these wires 65. As the time passes at a high-temperature state, the wires 65 are corroded with the wire corroding substance 66 to make the diameter finer or cause partial breaking of the wires. FIG. 25c is a section view of the heat deterioration magnetic body 62 diagrammatically illustrating a state of partly breaking the wires 65 in correspondence to FIG. 25a. At such a state, the permeability in the whole of the heat deterioration magnetic body 62 lowers.

On the other hand, the temperature of the tire portion attached with the composite magnet 54 is near to the temperature of the heat deterioration magnetic body 62, so that the degree of the heat deterioration of the tire portion is primarily interrelated to the degree of the heat deterioration of the heat deterioration magnetic body 62, and hence the degree of the heat deterioration of the tire portion is also interrelated to the permeability of the heat deterioration magnetic body 62. When the heat deterioration of this tire portion is small, the permeability of the heat deterioration magnetic body 62 is high and the magnetic force of the composite magnet 54 is large and hence the magnetic field from the composite magnet 54 is large, while as the heat deterioration of the tire portion proceeds, the permeability of the heat deterioration magnetic body 62 lowers and the magnetic force in the whole of the composite magnet 54 lowers, and hence the magnetic flux density detected by the magnetic sensor 64 decreases.

As the wire 65 can be used materials having a permeability of 100-20000 such as Fe, Ni, FeNiAl alloy, NiAl alloy, permalloy, amorphous metal and the like. In case of requiring a high corrosion, it is preferable to use Fe-based metal material such as Fe, FeNiAl or the like, while in case of inhibiting a corrosion, it is preferable to use Ni-based metal material such as Ni, NiAl, or the like.

Further, the diameter of the wire 65 is preferable to be not more than 1 mm from a viewpoint that the flexibility is given to the heat deterioration magnetic body 62. Moreover, in order to detect the heat deterioration of the tire portion, it is required to render a decreasing rate of a sectional area of the wire 65 accompanied with the progress of the corrosion into an adequate level. When the total sectional area of all wires is the same, as the diameter of the wire becomes small, the surface area of the wire becomes large and the decreasing rate of the sectional area through the corrosion becomes fast, while as the diameter of the wire becomes large, the decreasing rate of the sectional area becomes slow. From this point, the diameter of the wire is further preferable to be within a range of 50 $\mu$m - 500 $\mu$m.

It is important that the wire corroding substance 66 does not deteriorate the tire, so that it is preferable to use a substance containing a molecule such as $O_2$, $H_2O$, $H_2O_2$, $Cl_2$, $F_2$ or the like, or a substance containing an ion such as $H^+$, $NO_3^-$, $NO_3^-$, $MnO_4^{2-}$, $CrO_4^{2-}$, $Fe^{3+}$, $Cu^{2+}$, $Ce^{2+}$ or the like.

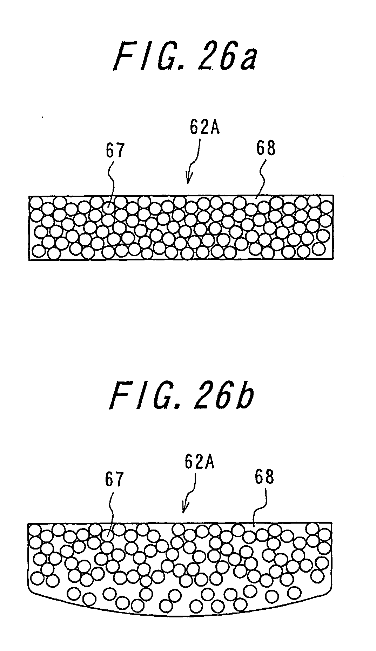

A heat deterioration magnetic body 62A shown in FIG. 26a and FIG. 26b can be used instead of the heat deterioration magnetic body 62 shown in FIG. 25a - FIG. 25c. FIG. 26a is a section view of the heat deterioration magnetic body 62A in a XXV-XXV section of FIG. 24. The heat deterioration magnetic body 62A is formed by mixing and dispersing magnetic powder 67 into a binder 68, which forms a part of the composite magnet 54 at an initial stage of heat deterioration because the magnetic powder 67 contacts with each other. Also, the binder 68 has such a characteristic that self-decomposition reaction or self-polymerization reaction is conducted to increase a volume as the time passes at a high-temperature state, so that as this reaction proceeds, the binder 68 enters into spaces of the magnetic powder 67 to cut the contact of the magnetic powder 67 accompanied with the increase of the volume. FIG. 26b is a section view of the heat deterioration magnetic body 62A diagrammatically illustrating a state of partly cutting the contact of the magnetic powder 67 in correspondence to FIG. 26a. At such a state, the permeability of the whole of the heat deterioration magnetic body 62A lowers.

Likewise the heat deterioration magnetic body 62, the lowering of the permeability of the heat deterioration magnetic body 62A has an interrelation to the degree of the heat deterioration of the tire portion. When the heat deterioration of the tire portion is small, the permeability of the heat deterioration magnetic body 62A is high and the magnetic force of the composite magnet 54 is large and hence the magnetic field formed by the composite magnet 54 is large, but as the heat deterioration of the tire portion becomes large, the permeability of the heat deterioration magnetic body 62 largely lowers and the magnetic force of the composite magnet 54 lowers.

As the magnetic powder 67 can be used a material having a permeability of 100-20000 such as iron, nickel, Fe, Ni, FeNiAl alloy, NiAl alloy, permalloy, sendust, amorphous metal or the like. Among them, the metal material can be obtained in form of particulates by an atomizing treatment that droplets of molten state are atomized by blowing an inert gas, water or the like. The particle size is preferable to be 10-1000 $\mu$m. When the particle size is less than 10 $\mu$m, the permeability of the heat deterioration magnetic body 62A before the heat deterioration is too small, while when the particle size exceeds 1000 $\mu$m, the flexibility of the heat deterioration magnetic body 62A is decreased, which is unfavorable in the attaching to the tire.

As an example of the binder 68 is mentioned an expandable substance. This substance increases the volume by an amount corresponding to bubbles produced by the self reaction, and the reaction rate increases together with the temperature, so that the increase of the volume to the original volume of the binder 68 can be corresponded to the degree of the heat deterioration of the tire. As such an expandable substance are mentioned, for example, an azo compound such as azodicarbon amide, azobisisobutyronitrile or the like, a nitroso compound such as N,N'-dinitrosopentamethylene tetrazine or the like, a sulfonylhydrazide compound such as p-toluene sulfonylhydrazine, p,p'-oxybis(benzenesulfohydrizde) or the like, and so on.

The composite magnet 54 is formed by laminating the permanent magnets 61A, 61B and the heat deterioration magnetic body 62 or 62A, so that it has a high flexibility and can deform following to the large deformation of the tire 9.

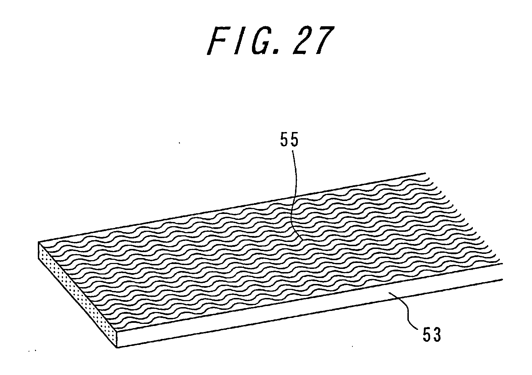

FIG. 27 is a perspective view illustrating a construction of a high permeability magnetic body ribbon 53. The high permeability magnetic body ribbon 53 is formed by arranging many high permeability linear bodies 55 previously formed into wave or hook shape in a flexible material such as rubber or the like so as to continuously extend in a longitudinal direction. These high permeability linear bodies 55 function magnetic paths for guiding the magnetic force from both ends of the composite magnet 54 to the vicinity of the bead portion 6 of the tire 9, while since the each linear body 55 is subjected to the forming, it can deform following to the tire deformation during the running of the tire without causing unreasonable stress and the length and the gauge of the linear body 55 are not changed by such a deformation and hence the permeability thereof is not changed, so that the change of the magnetic force of the composite magnet 54 can be transmitted to the vicinity of the bead portion 6 without change.

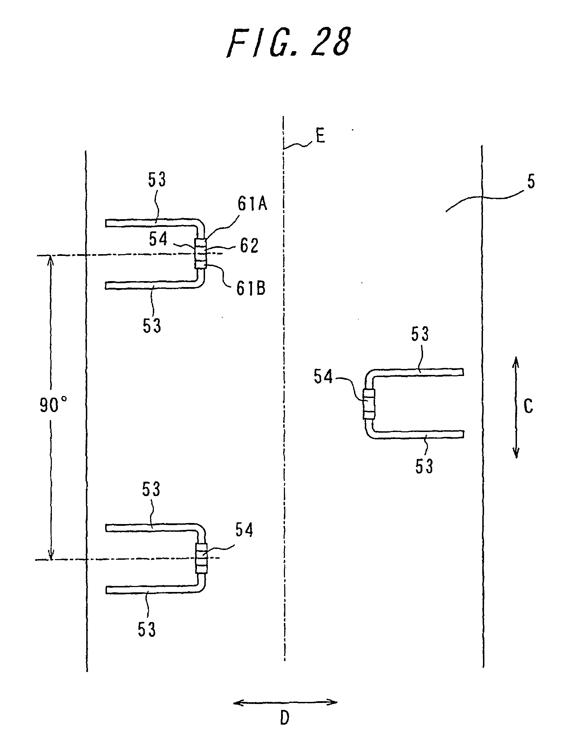

FIG. 28 is a developed view of the composite magnets 54 viewed from an inner face of the tire by developing the innerliner 5 into a plane. A direction shown by an arrow D is a widthwise direction of the tire, and a direction shown by an arrow C is a circumferential direction of the tire, and E is an equatorial plane of the tire 9. In each shoulder portion 2 of the innerliner 5 are arranged a plurality of composite magnets 54 each connected at both ends to the high permeability magnetic body ribbons 53 in one row at given pitches along the circumferential direction. Also, each of the composite magnets 54 is arranged at a posture of directing a straight line connecting the magnetic poles of the permanent magnets 61A, 61B to the circumferential direction of the tire 9. For example, in the embodiment of FIG. 28, the composite magnets 54 are arranged on either side every 4 magnets at a pitch of 90 degrees in the circumferential direction, and also the left-side composite magnets 54 and the right-side composite magnets 54 are arranged at different phases in the circumferential direction.

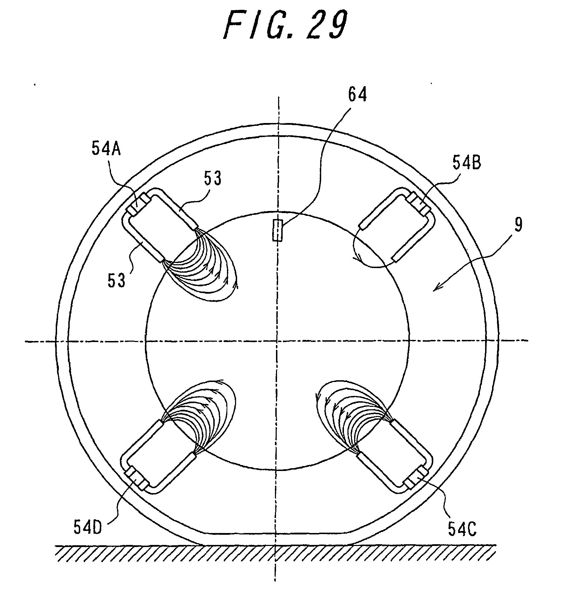

FIG. 29 is a view illustrating an arrangement of magnetic force lines through the magnetic field formed between the ends of a pair of the high permeability magnetic body ribbons 53 and magnetic sensor 64 detecting them in a section XXIX-XXIX of FIG. 22. In FIG. 29 is shown a state that among tire portions attached with four composite magnets 54A, 54B, 54C and 54D, which are arranged at intervals of 90 degrees in the circumferential direction, the degree of the heat deterioration in the tire portions corresponding to 54A, 54C and 54D is normal and the degree of the heat deterioration in the tire portion corresponding to 54B is abnormal. At this state, only the magnetic force of the composite magnet 54B abnormally lowers through the influence of the heat deterioration and the number of magnetic force lines formed between the ends of the high permeability magnetic body ribbons 53 corresponding to the composite magnet 54B is extremely less.

The magnetic sensor 64 is set to a portion of an axle case 13, which is a non-rotating portion of an axle 10 mounted with the tire 9, just above its axis center at a posture of detecting magnetic force lines in a plane perpendicular to the tire axis center and can detect a component in the circumferential direction of the tire among the magnetic force lines radiated from the composite magnet 54 at a normal state of the heat deterioration. Since the magnetic force lines formed between the pair of the high permeability magnetic body ribbons 53 in each composite magnet rotate together with rotation of the tire, when such magnetic force lines successively come across the circumferential position of the magnetic sensor 64 arranged, a peak of a magnetic flux density corresponding to the intensity of the magnetic force lines appears in the magnetic sensor 64.

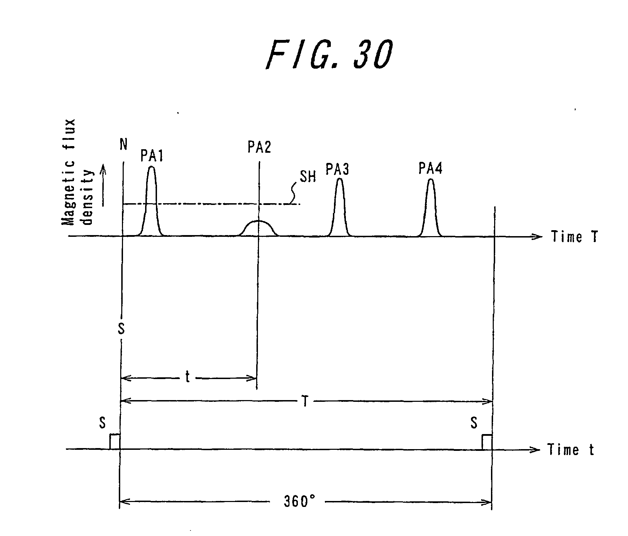

FIG. 30 is a graph showing a time change of the magnetic flux density detected by the magnetic sensor 64 during the rotation of the tire 9, in which a magnitude of the magnetic flux density is plotted on an ordinate and a lapse time T is plotted on an abscissa. Also, FIG. 30 shows a pulse S emitted when the one place on the circumference of the rotating portion of the axle pass a given position of the non-rotating portion of the axle during the rotation of the tire 9 in correspondence with a coordinate of time in which a generation timing of the pulse S is a phase starting point every the rotation of the tire.

Since the magnetic sensor 64 most strongly detects a magnetic field from a portion just above the tire as mentioned above, when the tire 9 is rotated to position the composite magnet 54 arranged in the shoulder portion 2 just above the axis, the magnetic flux density detected by the magnetic sensor 64 shows peaks PA1-PA4. When the degree of the heat deterioration is normal, since the magnetic force of the composite magnet 54 is large, the magnetic flux density of the peak is large, but if the heat deterioration abnormally progresses and the magnetic force of the composite magnet 54 becomes small, the magnitude of the magnetic flux density as shown by the peak PA2 is lower than a given threshold value SH. In the latter case, a signal on the occurrence of abnormality is transmitted from the magnetic sensor 64 to the vehicle body side, whereby the abnormality can be known to a driver through, for example, an alarm device arranged in the vehicle body side.

The method of corresponding each peak of continuously developed magnetic flux densities to each composite magnet 54 arranged on the tire 9 will be described with reference to the peak PA2 below. When a time from a detection of the pulse S at the phase starting point to a detection of the peak PA2 is t and a time between adjoining pulses S is T, a phase $\theta A2$ of the peak PA2 can be determined by an equation (1) through a proportional calculation. Since the rotating position of the tire generating the pulse S is clear, the composite magnet 4 located just above the axis when the tire is further rotated from the above rotating position by $\theta A2$ can be related to the peak PA2 of the magnetic flux density.

$$\theta A2 = (t/T) \times 360 \qquad (1)$$

Thus, the fact that the abnormal progress of the heat deterioration of the tire 9 can be detected by using the tire heat deterioration detection sensor 51 of this embodiment. And also, there can be checked the magnetic filed from what composite magnet 54 is abnormal, from which a portion of the tire abnormally progressing the heat deterioration can be specified. Further, when a relational expression showing a relation between a magnitude of a peak of the magnetic flux density to be detected and a heat deterioration is previously provided in addition to the judgment of the abnormality on the degree of the heat deterioration, the degree of the heat deterioration can be determined in real time by back calculation from the magnitude of the peak of the magnetic flux density detected, and hence the degree of the heat deterioration measured itself can be transmitted to the driver.

Although the above is described with reference to one embodiment of the tire heat deterioration detection sensor, the heat deterioration detection sensor 51 of this embodiment is constructed by replacing the temperature-sensitive magnetic body 22 in the tire temperature sensor 1 of the first embodiment with the heat deterioration magnetic body 62. Similarly, various embodiments of the tire heat deterioration detection sensor are obtained by replacing the temperature-sensitive magnetic bodies of the second to sixth embodiments with the heat deterioration magnetic body, respectively. The explanation on the tire heat deterioration detection sensors of these embodiments is omitted here for avoiding overlaps, but even in these embodiments of the heat deterioration detection sensor, the heat deterioration can be determined by reverse calculation from the magnetic flux density detected by the magnetic sensor by utilizing a feature that the permeability of the heat deterioration magnetic body is changed in accordance with the heat deterioration of the corresponding tire portion, whereby the progressing degree of the heat deterioration in the tire can be detected.

INDUSTRIAL APPLICABILITY

As seen from the above, according to the invention, the change of magnetic characteristics in the magnetic circuit constituting body or the composite magnet is detected by the magnetic sensor detecting the magnetic field leaked from the magnetic circuit constituting body arranged in the required portion of the tire or the magnetic field from the composite magnet, while the magnetic characteristics of the magnetic circuit constituting body or the composite magnet are constructed so as to change dependent on the temperature or the degree of heat deterioration in the required tire portion, so that the temperature or the degree of heat deterioration in the required tire portion can be known from the magnetic flux density detected by the magnetic sensor and also the abnormality of the temperature or the degree of the heat deterioration can be detected to give an alarm to a driver and hence help the safe running of the vehicle.

**Claims**

1. A tire temperature sensor comprising a magnetic circuit constituting body arranged in the above portion of the tire and forming a magnetic closed circuit, and a magnetic sensor detecting a magnetic field leaked from the magnetic circuit constituting body, in which said magnetic circuit constituting body has a characteristic of increasing a leakage magnetic field as a temperature rises in the vicinity of a predefined temperature.

2. A tire temperature sensor according to claim 1, wherein the magnetic circuit constituting body comprises at least one permanent magnet and at least one temperature-sensitive magnetic body magnetically connected to a magnetic pole of the permanent magnet, and the temperature-sensitive magnetic body has a characteristic of dropping a permeability as the temperature rises in the vicinity of the predefined temperature.

3. A tire temperature sensor according to claim 2, wherein between a magnetic pole of the permanent magnet and an end of the temperature-sensitive magnetic body is arranged a magnetic connecting yoke magnetically connecting them, and the magnetic connecting yoke is made of a magnetic body having a high permeability.

4. A tire temperature sensor according to claim 2 or 3, wherein the magnetic circuit constituting body is attached to an inner face of the tire, and the magnetic circuit constituting body is constructed with a laminate including two layers of a permanent magnet sheet made of the permanent magnet and a temperature-sensitive magnetic body sheet made of the temperature-sensitive magnetic body, and the temperature-sensitive magnetic body sheet is arranged onto a face of the tire to be attached.

5. A tire temperature sensor according to claim 4, wherein a radiation yoke concentrically radiating a leakage magnetic field is arranged on a side of the permanent magnet sheet opposite to the temperature-sensitive magnetic body sheet.

6. A tire temperature sensor comprising a composite magnet arranged in this portion of the tire and having magnetic poles of reverse polarity at both ends thereof and a magnetic sensor detecting a magnetic field formed by the composite magnet, in which said composite magnet has a characteristic of dropping a magnetic force as a temperature rises in the vicinity of a predefined temperature.

7. A tire temperature sensor according to claim 6, wherein the composite magnet comprises at least one permanent magnet and at least one temperature-sensitive magnetic body magnetically connected to a magnetic pole of the permanent magnet, and the temperature-sensitive magnetic body has a characteristic of dropping a permeability as the temperature rises in the vicinity of the predefined temperature.

8. A tire temperature sensor according to claim 6 or 7, wherein a high permeability magnetic body ribbon extending up to a neighborhood of a bead portion of the tire and attached to an inner face of the tire is magnetically connected to both magnetic poles of the composite magnet, respectively.

9. A tire temperature sensor according to any one of claims 1 to 8, wherein a magnetic sensor is arranged on a non-rotating portion at a side of a vehicle body.

10. A tire temperature sensor according to claim 9, wherein the magnetic sensor is arranged on an upper part of a non-rotating portion of an axle.

**11.** A tire temperature sensor according to any one of claims 1 to 8, wherein the magnetic sensor is arranged on a rotating portion of an axle.

**12.** A tire temperature sensor according to any one of claims 1 to 11, wherein a rare earth magnetic material is used as a magnetic material forming the permanent magnet.

**13.** A tire temperature sensor according to any one of claims 1 to 12, wherein as a material forming the temperature-sensitive magnetic body is used a Ni-based alloy inclusive of NiCu, NiAl, NiCr, NiV, NiSi, NiTi, NiMo and NiZn, a Mn-Cu based alloy, a Ni-Zn-$Fe_2O_4$ based alloy, a Mn-Zn-$Fe_2O_3$ based alloy, a Fe-Ni based alloy, a Ni-Cu based alloy or a Fe-Ni-Cr-Si based alloy.

**14.** A tire temperature sensor according to any one of claims 1 to 13, wherein each of the permanent magnet and the temperature-sensitive magnetic body is made of a bond magnetic body formed by mixing and dispersing magnetic powder into rubber.

**15.** A tire heat deterioration detection sensor for detecting a degree of heat deterioration in an necessary portion of a tire, which is a tire heat deterioration detection sensor comprising a magnetic circuit constituting body arranged in this necessary portion of the tire and forming a magnetic closed circuit and a magnetic sensor detecting a magnetic field leaked from the magnetic circuit constituting body, in which the magnetic circuit constituting body has a characteristic of increasing a leakage magnetic field accompanied with the progress of heat deterioration.

**16.** A tire heat deterioration detection sensor according to claim 15, wherein the magnetic circuit constituting body comprises at least one permanent magnet and at least one heat deterioration magnetic body magnetically connected to a magnetic pole of the permanent magnet, and the heat deterioration magnetic body has a characteristic of dropping a permeability accompanied with the progress of the heat deterioration.

**17.** A tire heat deterioration detection sensor according to claim 16, wherein between a magnetic pole of the permanent magnet and an end of the heat deterioration magnetic body is arranged a magnetic connecting yoke magnetically connecting them, and the magnetic connecting yoke is made of a magnetic body having a high permeability.

**18.** A tire heat deterioration detection sensor according to claim 16 or 17, wherein the magnetic circuit constituting body is attached to an inner face of the tire, and the magnetic circuit constituting body is constructed with a laminate including two layers of a permanent magnet sheet made of the permanent magnet and a heat deterioration magnetic body sheet made of the heat deterioration magnetic body, and the heat deterioration magnetic body sheet is arranged onto a face of the tire to be attached.

**19.** A tire heat deterioration detection sensor according to claim 18, wherein a radiation yoke concentrically radiating a leakage magnetic field is arranged on a side of the permanent magnet sheet opposite to the heat deterioration magnetic body sheet.

**20.** A tire heat deterioration detection sensor comprising a composite magnet arranged in this portion of the tire and having magnetic poles of reverse polarity at both ends thereof and a magnetic sensor detecting a magnetic field formed by the composite magnet, in which said composite magnet has a characteristic of dropping a magnetic force accompanied with the progress of heat deterioration.

**21.** A tire heat deterioration detection sensor according to claim 20, wherein the composite magnet comprises at least one permanent magnet and at least one heat deterioration magnetic body magnetically connected to a magnetic pole of the permanent magnet, and the heat deterioration magnetic body has a characteristic of dropping a permeability accompanied with the progress of heat deterioration.

**22.** A tire heat deterioration detection sensor according to claim 20 or 21, wherein a high permeability magnetic body ribbon extending up to a neighborhood of a bead portion of the tire and attached to an inner face of the tire is magnetically connected to both magnetic poles of the composite magnet, respectively.

**23.** A tire heat deterioration detection sensor according to any one of claims 15 to 22, wherein a magnetic sensor is arranged on a non-rotating portion at a side of a vehicle body.

**24.** A tire heat deterioration detection sensor according to claim 23, wherein the magnetic sensor is arranged on an upper part of a non-rotating portion of an axle.

**25.** A tire heat deterioration detection sensor according to any one of claims 15 to 24, wherein the magnetic sensor is arranged on a rotating portion of an axle.

**26.** A tire heat deterioration detection sensor according to any one of claims 15 to 25, wherein a rare earth magnetic material is used as a magnetic material forming the permanent magnet.

**27.** A tire heat deterioration detection sensor according to any one of claims 15 to 26, wherein the heat deterioration magnetic body is comprised of high permeability wires arranged along a direction of magnetic force lines and a wire-corroding substance arranged in contact with the surround of the wires, and the wire-corroding substance has a corrosion property to the wire and a characteristic of promoting a corroding rate accompanied with the rise of the temperature.

**28.** A tire heat deterioration detection sensor according to any one of claims 15 to 27, wherein the heat deterioration magnetic body is comprised of a binder and a high permeability magnetic powder forming a part of a magnetic circuit by mixing and dispersing into the binder and contacting with each other, and the binder conducts self-decomposition reaction or self-polymerization reaction together with the increase of volume and has a characteristic of accelerating a reaction rate accompanied with the rise of the temperature.

**29.** A tire heat deterioration detection sensor according to claim 28, wherein the magnetic powder is made of a temperature-sensitive magnetic material lowering a permeability with the rise of a temperature within a given temperature range.

**30.** A tire heat deterioration detection sensor according to any one of claims 15 to 29, wherein the permanent magnet is made of a bond magnetic body formed by mixing and dispersing a magnetic powder into rubber, and a flexibility is given to the heat deterioration magnetic body.

**31.** A tire provided with a magnetic circuit constituting body or a composite magnet as claimed in any one of claims 1 to 30.

# FIG. 1

# FIG. 2

# FIG. 3a

```
        21A              22              21B             4

   ┌────────────┬──────────────────┬────────────┐
   │            │                  │            │
   │  N      S  │                  │  N      S  │
   │            │                  │            │
   └────────────┴──────────────────┴────────────┘
```

# FIG. 3b

```
      21A                  22        21B      4           5

  ─·──┌────────────────────────────────────┐──·──·──
      └────────────────────────────────────┘
```

*FIG. 4*

# FIG. 5

# FIG. 6

# FIG. 7

EP 1 508 790 A1

# FIG. 8

29

# F/G. 9

# FIG. 10

# FIG. 11

# FIG. 12

# FIG. 13

# FIG. 14

# *FIG. 15a*

52

44

N

S

# *FIG. 15b*

53a  S1  54a  52  F  51  53a

53b  S2  54b  53b

# FIG. 16

# FIG. 17a

# FIG. 17b

# FIG. 18

# FIG. 19

# FIG. 20

# FIG. 21

# FIG. 22

# FIG. 23

# FIG. 24a

# FIG. 24b

## *FIG. 25a*

## *FIG. 25b*

## *FIG. 25c*

## F I G. 26a

## F I G. 26b

# FIG. 27

# FIG. 28

# FIG. 29

# FIG. 30

# INTERNATIONAL SEARCH REPORT

| International application No. |
|---|
| PCT/JP03/05698 |

**A. CLASSIFICATION OF SUBJECT MATTER**
Int.Cl$^7$  G01K7/38, G01K13/08, B60C19/00, B60C23/20

*According to International Patent Classification (IPC) or to both national classification and IPC*

**B. FIELDS SEARCHED**

Minimum documentation searched (classification system followed by classification symbols)
Int.Cl$^7$  G01K7/36-38, G01K13/08, B60C19/00, B60C23/20, G01M17/00-02

Documentation searched other than minimum documentation to the extent that such documents are included in the fields searched
Jitsuyo Shinan Koho          1922-1996   Toroku Jitsuyo Shinan Koho   1994-2003
Kokai Jitsuyo Shinan Koho    1971-2003   Jitsuyo Shinan Toroku Koho   1996-2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 60-55769 B2  (The Goodyear Tire & Rubber Co.),<br>06 December, 1985 (06.12.85),<br>Full text; all drawings<br>& US 4052696 A          & DE 2709130 A<br>& FR 2342860 A | 1,31<br>2-4,6,7,9-14<br>5,8,15-30 |
| Y<br>A | JP 61-39970 Y2  (Fujitsu Ltd.),<br>15 November, 1986 (15.11.86),<br>Page 2, left column, lines 5 to 29<br>(Family: none) | 2-4,9-14<br>5,15-30 |
| Y<br>A | JP 63-247631 A  (The Nippon Signal Co., Ltd.),<br>14 October, 1988 (14.10.88),<br>Page 2, lower right column, line 7 to<br>page 3, upper left column, line 11<br>(Family: none) | 6,7,9-14<br>8,15-30 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 August, 2003 (08.08.03) | 19 August, 2003 (19.08.03) |

| Name and mailing address of the ISA/ | Authorized officer |
|---|---|
| Japanese Patent Office | |
| Facsimile No. | Telephone No. |

Form PCT/ISA/210 (second sheet) (July 1998)